# EUROPEAN PATENT SPECIFICATION

(11) **EP 4 478 015 B1**
(45) Date of publication and mention of the grant of the patent: **17.06.2026**
(21) Application number: 23784275.2
(22) Date of filing: 04.04.2023
(51) Int. Cl.: G01J 3/28, H04N 25/40, G01J 1/44, G01J 1/42, G01J 3/02, H04N 25/13, H04N 25/51, H04N 25/571, H04N 25/77, H04N 25/78

(54) **MULTISPECTRAL PROCESSING METHOD AND MULTISPECTRAL DETECTION APPARATUS**
MULTISPEKTRALES VERARBEITUNGSVERFAHREN UND MULTISPEKTRALE DETEKTIONSVORRICHTUNG
PROCÉDÉ DE TRAITEMENT MULTISPECTRAL ET APPAREIL DE DÉTECTION MULTISPECTRALE

(30) Priority: 06.04.2022 CN 202210357214
(43) Date of publication of application: 18.12.2024
(73) Proprietor: Huawei Technologies Co., Ltd., Shenzhen, Guangdong 518129 (CN)
(72) Inventor: HU, Jia, Shenzhen, Guangdong 518129 (CN)
(74) Representative: Gill Jennings & Every LLP
(86) International application number: PCT/CN2023/086214
(87) International publication number: WO 2023/193712

(56) References cited:
- CN-A- 104 081 528
- CN-A- 108 426 639
- CN-A- 111 579 497
- CN-A- 113 037 989
- CN-A- 113 048 907
- CN-A- 113 048 907
- CN-U- 208 028 993
- US-A1- 2020 120 293

## Description

This application claims priority to Chinese Patent Application No. 202210357214.9, filed with the China National Intellectual Property Administration on April 6, 2022 and entitled "MULTI-SPECTRAL PROCESSING METHOD AND MULTI-SPECTRAL DETECTION APPARATUS", which is incorporated herein by reference in its entirety.

### TECHNICAL FIELD

Embodiments of this application relate to the field of chip technologies, and in particular, to a multi-spectral processing method and a multi-spectral detection apparatus.

### BACKGROUND

A multi-spectral technology is gradually applied to ambient light detection and material identification, and provides richer information for accurate color reproduction. Currently, it is common that optical-to-electrical conversion is performed based on a standard imaging photon detector (Imaging Photon Detector, IPD) structure, to form a current, and a current collection analog-to-digital converter (Analog-to-Digital Converter, ADC) quantizes current signal data to obtain spectral information. A Si surface of each IPD is coated with an interference filtering film, and a quantity of layers and thickness of a film system are designed and manufactured for a designed band-pass spectrum, to form a final multi-spectral detector.

However, for a chip in which a multi-spectral sensor is located, a total area of the chip is fixed, an area occupied by each pixel (pixel) includes an IPD structure, and each pixel needs to occupy a large area. Therefore, a quantity of pixels is limited, and resolution of an image is low. As a result, high-resolution signal collection on an acceptable target surface of a chip of an architecture, for example, a mobile phone, cannot be implemented. In addition, a high gain of the ADC serves a dark light environment. In the dark light environment, the current collection ADC and the foregoing optical-to-electrical conversion process do not have a noise suppression means (for example, correlated double sampling), and a noise level is poor and dark light performance is poor due to factors such as a dark current. As a result, effective luminance, spectral information detection, and high-quality imaging in an ultra-night environment cannot be implemented.

CN 113 037 989 discloses an image sensor integrating a time-of-flight (ToF) camera and a hyperspectral camera into one camera module.

CN 113 048 907 discloses a single-pixel multi-spectral imaging method based on macro-pixel segmentation.

### SUMMARY

Embodiments of this application provide a multi-spectral processing method and a multi-spectral detection apparatus, to support high-quality multi-spectral imaging with small pixels and low noise in multi-spectral processing, implement high-resolution signal collection, and improve dark light performance.

To achieve the foregoing objectives, the following technical solutions are used in embodiments of this application.

According to a first aspect, a multi-spectral detection apparatus is provided. The multi-spectral detection apparatus includes a logic control circuit, a plurality of spectral arrays, a row-column control circuit, a plurality of current collection analog-to-digital converters ADCs (integral ADCs 2), and a plurality of voltage collection ADCs (ramp ADCs 1). Each spectral array includes a plurality of single-channel spectral units, and each single-channel spectral unit in the plurality of single-channel spectral units includes a plurality of pixel units. For each pixel unit in the plurality of pixel units, each pixel unit is coupled to the row-column control circuit, one current collection ADC in the plurality of current collection ADCs, and one voltage collection ADC in the plurality of voltage collection ADCs. Each pixel unit includes a photoelectric detector PD, a voltage detection circuit, and a current detection circuit. The voltage detection circuit includes a first switch component, and the current detection circuit includes a second switch component. The logic control circuit is configured to control the first switch component and the second switch component in each pixel unit, to perform imaging or ambient light detection in different working modes. The logic control circuit is further configured to control the row-column control circuit to perform imaging enhancement or ambient light detection enhancement on the plurality of pixel units in the plurality of spectral arrays in different signal combination manners.

Therefore, in this application, according to a newly designed circuit structure of the pixel units, working modes of the pixel units can be switched as needed. Specifically, a working mode of each pixel unit may be determined to be used for imaging or ambient light detection by turning on or turning off the first switch component and the second switch component. On the basis of this, in this application, the pixel units in the plurality of spectral arrays are combined by using the row-column control circuit, and ambient light detection enhancement or imaging enhancement is performed in the plurality of combination manners. In this way, high-resolution high-quality imaging and high-dynamic ambient light detection can be implemented in the plurality of combination manners of reading out a new pixel unit in the plurality of spectral arrays. In other words, this supports high-quality multi-spectral imaging with small pixels and low noise in multi-spectral processing, implements high-resolution signal collection, and improves dark light performance.

In a possible design, the logic control circuit is configured to control the first switch component in each pixel unit to be turned on and the second switch component in each pixel unit to be turned off, to transmit, to the voltage collection ADC via the first switch component, a current signal obtained by performing optical-to-electrical conversion by the PD in each pixel unit, to perform imaging; or the logic control circuit is configured to control the first switch component in each pixel unit to be turned off and the second switch component in each pixel unit to be turned on, to transmit, to the current collection ADC via the second switch component, a current signal obtained by performing optical-to-electrical conversion by the PD in each pixel unit, to perform ambient light detection. In other words, during multi-spectral imaging, current signals obtained through optical-to-electrical conversion can be combined and input to the voltage collection ADC by turning on the first switch component in the voltage detection circuit; and during multi-spectral ambient light detection, current signals obtained through optical-to-electrical conversion can be combined and input to the current collection ADC by turning on the second switch component in the current detection circuit, to implement high-quality multi-spectral imaging and high-dynamic ambient light detection.

In a possible design, the current detection circuit in each pixel unit further includes a current mirror, and the voltage detection circuit in each pixel unit further includes a reset transistor, a source follower transistor, and a row selector transistor. For each pixel unit, an output end of the PD is coupled to a first end of the first switch component and a first end of the second switch component, a second end of the first switch component is coupled to a first end of the reset transistor and a first end of the source follower transistor, a second end of the source follower transistor is coupled to a first end of the row selector transistor, a second end of the row selector transistor is coupled to a first input end of the row-column control circuit, a first output end of the row-column control circuit is coupled to the voltage collection ADC, a second output end of the row-column control circuit is coupled to the current collection ADC, a second end of the second switch component is coupled to a first end of the current mirror, and a first output end of the current mirror is coupled to a second input end of the row-column control circuit. For each pixel unit, a plurality of objectives such as multi-spectral imaging or ambient light detection be achieved through switching of the current detection circuit and the voltage detection circuit.

In a possible design, the logic control circuit is configured to: when it is determined to perform ambient light intensity detection, control the first switch component in each pixel unit to be turned off and the second switch component in each pixel unit to be turned on; and control, in a form of a single spectral array, the row-column control circuit to perform signal combination by using all the single-channel spectral units in each spectral array as a group, where a signal obtained by performing signal combination in the group indicates an ambient light intensity in a spectral array region. Therefore, according to the ambient light intensity detection method provided in this application, for each pixel unit, a part of a circuit (including a capacitor C) coupled to the first switch component in the pixel unit does not work, to avoid a problem of saturation caused by signal clamping (clamping). Therefore, the method is applicable to high-dynamic range light sensing detection. In addition, in this application, different current summation manners can be used to meet detection requirements of ambient light of different intensities.

In a possible design, the logic control circuit is configured to: when it is determined to perform ambient light intensity detection, control the first switch component in each pixel unit to be turned off and the second switch component in each pixel unit to be turned on; and control the row-column control circuit to divide the plurality of spectral arrays into regions, and perform signal combination by using single-channel spectral units in all spectral arrays in each region as a group, where a signal obtained by performing signal combination in the group indicates an ambient light intensity in a spectral array region. In this way, the plurality of spectral arrays are further divided and combined, noise can be reduced or light intensity detection sensitivity can be increased.

In a possible design, the logic control circuit is configured to: when it is determined to perform ambient light type detection, control the first switch component in each pixel unit to be turned off and the second switch component in each pixel unit to be turned on; and control the row-column control circuit to divide the plurality of spectral arrays into regions, and perform signal combination by using same single-channel spectral units in all spectral arrays in each region as a group, to obtain a combined signal of each type of single-channel spectral unit in each region, where a signal obtained by performing signal combination in the group in each region indicates an ambient light type. Therefore, according to the ambient light type detection method for an ultra-high-dynamic scenario provided in this application, the plurality of spectral arrays can be partitioned, and flexible signal combination manners can be used. Therefore, the method is applicable to scenarios with different ambient light luminance, to implement a balance between precision of ambient light type detection and resolution, and avoid a problem of saturation caused by signal clamping. Therefore, the method is applicable to high-dynamic light sensing detection. Multi-region high-dynamic multi-channel spectral information can be used to assist another camera in region-based environment type detection and region-based AWB parameter adaptation, and assist in more accurate color reproduction in a single or mixed color temperature scenario.

In a possible design, the logic control circuit is configured to: when it is determined to perform multi-spectral imaging, control the first switch component in each pixel unit to be turned on and the second switch component in each pixel unit to be turned off; and control the row-column control circuit to perform signal combination by using the plurality of pixel units of each single-channel spectral unit in each spectral array in the plurality of spectral arrays as a group, to obtain a combined signal of each single-channel spectral unit in each spectral array, where the combined signal of each single-channel spectral unit in each spectral array is used for multi-spectral imaging.

Therefore, the multi-spectral imaging method provided in this application may be used for hyper-spectral imaging, and color reproduction and an image effect of a higher color gamut can be implemented by using high-resolution high-dynamic multi-spectral information. Compared with an existing solution in which a multi-spectral effect and a high-dynamic effect cannot be effectively and flexibly considered, this application can implement high-resolution high-spectral imaging, balance resolution and color accuracy, implement low noise, and is applicable to high-quality image restoration and night scene effect improvement.

In a possible design, the logic control circuit is configured to: when it is determined to perform multi-spectral imaging, control the first switch component in each pixel unit to be turned on and the second switch component in each pixel unit to be turned off; control the row-column control circuit to group the plurality of single-channel spectral units in each spectral array in the plurality of spectral arrays, where each group includes a plurality of adjacent single-channel spectral units; and control the row-column control circuit to perform signal combination in each group of each spectral array, to obtain a combined signal of each group of each spectral array, where the combined signal of each group of each spectral array is used for multi-spectral imaging. In this manner, different spectral channels are adjacent and then combined. Although specific color gamut space is sacrificed, a color and dynamic range can be improved during multi-spectral imaging.

In a possible design, signal combination includes charge combination, analog domain combination, or digital domain combination, but is not limited to the three combination manners.

In a possible design, the logic control circuit is further configured to: when it is determined that an ambient light intensity of a current frame of image is greater than or equal to a preset threshold, reduce exposure and/or a gain of each pixel unit of a next frame of image when obtaining a signal of each pixel unit of the next frame of image; or when it is determined that an ambient light intensity of a current frame of image is less than a preset threshold, increase exposure and/or a gain of each pixel unit of a next frame of image when obtaining a signal of each pixel unit of the next frame of image. In this way, a readout manner of each bottom-layer pixel unit can be dynamically adapted to a low gain or a high gain based on luminance detection information of the current frame, to further meet a requirement for a dynamic range of light intensity detection.

According to a second aspect, a multi-spectral processing method is provided, applied to a multi-spectral detection apparatus. The multi-spectral detection apparatus includes a logic control circuit, a plurality of spectral arrays, a row-column control circuit, a plurality of current collection analog-to-digital converters ADCs, and a plurality of voltage collection ADCs. Each spectral array includes a plurality of single-channel spectral units, and each single-channel spectral unit in the plurality of single-channel spectral units includes a plurality of pixel units. For each pixel unit in the plurality of pixel units, each pixel unit is coupled to the row-column control circuit, one current collection ADC in the plurality of current collection ADCs, and one voltage collection ADC in the plurality of voltage collection ADCs. Each pixel unit includes a photoelectric detector PD, a voltage detection circuit, and a current detection circuit. The voltage detection circuit includes a first switch component, and the current detection circuit includes a second switch component. The method includes: The multi-spectral detection apparatus controls the logic control circuit to control the first switch component and the second switch component in each pixel unit, to perform imaging or ambient light detection in different working modes; and the multi-spectral detection apparatus controls the logic control circuit to control the row-column control circuit to perform imaging enhancement or ambient light detection enhancement on the plurality of pixel units in the plurality of spectral arrays in different signal combination manners.

In a possible design, that the multi-spectral detection apparatus controls the logic control circuit to control the first switch component and the second switch component in each pixel unit, to perform imaging or ambient light detection in different working modes includes: The multi-spectral detection apparatus controls the logic control circuit to be configured to turn on the first switch component in each pixel unit and turn off the second switch component in each pixel unit, to transmit, to the voltage collection ADC via the first switch component, a current signal obtained by performing optical-to-electrical conversion by the PD in each pixel unit, to perform imaging; or the multi-spectral detection apparatus controls the logic control circuit to be configured to turn off the first switch component in each pixel unit and turn on the second switch component in each pixel unit, to transmit, to the current collection ADC via the second switch component, a current signal obtained by performing optical-to-electrical conversion by the PD in each pixel unit, to perform ambient light detection.

In a possible design, the current detection circuit in each pixel unit further includes a current mirror, and the voltage detection circuit in each pixel unit further includes a reset transistor, a source follower transistor, and a row selector transistor. For each pixel unit, an output end of the PD is coupled to a first end of the first switch component and a first end of the second switch component, a second end of the first switch component is coupled to a first end of the reset transistor and a first end of the source follower transistor, a second end of the source follower transistor is coupled to a first end of the row selector transistor, a second end of the row selector transistor is coupled to a first input end of the row-column control circuit, a first output end of the row-column control circuit is coupled to the voltage collection ADC, a second output end of the row-column control circuit is coupled to the current collection ADC, a second end of the second switch component is coupled to a first end of the current mirror, and a first output end of the current mirror is coupled to a second input end of the row-column control circuit.

In a possible design, that the multi-spectral detection apparatus controls the logic control circuit to control the row-column control circuit to perform imaging enhancement or ambient light detection enhancement on the plurality of pixel units in the plurality of spectral arrays in different signal combination manners includes: when it is determined to perform ambient light intensity detection, controlling the first switch component in each pixel unit to be turned off and the second switch component in each pixel unit to be turned on; and controlling, in a form of a single spectral array, the row-column control circuit to perform signal combination by using all the single-channel spectral units in each spectral array as a group, where a signal obtained by performing signal combination in the group indicates an ambient light intensity in a spectral array region. In a possible design, that the multi-spectral detection apparatus controls the logic control circuit to control the row-column control circuit to perform imaging enhancement or ambient light detection enhancement on the plurality of pixel units in the plurality of spectral arrays in different signal combination manners includes: when it is determined to perform ambient light intensity detection, controlling the first switch component in each pixel unit to be turned off and the second switch component in each pixel unit to be turned on; and controlling the row-column control circuit to divide the plurality of spectral arrays into regions, and performing signal combination by using single-channel spectral units in all spectral arrays in each region as a group, where a signal obtained by performing signal combination in the group indicates an ambient light intensity in a spectral array region.

In a possible design, that the multi-spectral detection apparatus controls the logic control circuit to control the row-column control circuit to perform imaging enhancement or ambient light detection enhancement on the plurality of pixel units in the plurality of spectral arrays in different signal combination manners includes: when it is determined to perform ambient light type detection, controlling the first switch component in each pixel unit to be turned off and the second switch component in each pixel unit to be turned on; and controlling the row-column control circuit to divide the plurality of spectral arrays into regions, and performing signal combination by using same single-channel spectral units in all spectral arrays in each region as a group, to obtain a combined signal of each type of single-channel spectral unit in each region, where a signal obtained by performing signal combination in the group in each region indicates an ambient light type.

In a possible design, that the multi-spectral detection apparatus controls the logic control circuit to control the row-column control circuit to perform imaging enhancement or ambient light detection enhancement on the plurality of pixel units in the plurality of spectral arrays in different signal combination manners includes: when it is determined to perform multi-spectral imaging, controlling the first switch component in each pixel unit to be turned on and the second switch component in each pixel unit to be turned off; and controlling the row-column control circuit to perform signal combination by using the plurality of pixel units of each single-channel spectral unit in each spectral array in the plurality of spectral arrays as a group, to obtain a combined signal of each single-channel spectral unit in each spectral array, where the combined signal of each single-channel spectral unit in each spectral array is used for multi-spectral imaging.

In a possible design, that the multi-spectral detection apparatus controls the logic control circuit to control the row-column control circuit to perform imaging enhancement or ambient light detection enhancement on the plurality of pixel units in the plurality of spectral arrays in different signal combination manners includes: when it is determined to perform multi-spectral imaging, controlling the first switch component in each pixel unit to be turned on and the second switch component in each pixel unit to be turned off; controlling the row-column control circuit to group the plurality of single-channel spectral units in each spectral array in the plurality of spectral arrays, where each group includes a plurality of adjacent single-channel spectral units; and controlling the row-column control circuit to perform signal combination in each group of each spectral array, to obtain a combined signal of each group of each spectral array, where the combined signal of each group of each spectral array is used for multi-spectral imaging.

In a possible design, signal combination includes charge combination, analog domain combination, or digital domain combination.

The method further includes: when it is determined that an ambient light intensity of a current frame of image is greater than or equal to a preset threshold, reducing exposure and/or a gain of each pixel unit of a next frame of image when obtaining a signal of each pixel unit of the next frame of image; or when it is determined that an ambient light intensity of a current frame of image is less than a preset threshold, increasing exposure and/or a gain of each pixel unit of a next frame of image when obtaining a signal of each pixel unit of the next frame of image.

According to a third aspect, an embodiment of this application provides a computer-readable storage medium, including computer instructions. When the computer instructions are run on an electronic device, the electronic device is enabled to perform the multi-spectral processing method according to any one of the second aspect and the possible implementations of the second aspect.

According to a fourth aspect, an embodiment of this application provides a computer program product. When the computer program product runs on a computer or a processor, the computer or the processor is enabled to perform the multi-spectral processing method according to any one of the second aspect and the possible implementations of the second aspect.

According to a fifth aspect, a chip is provided, including the multi-spectral detection apparatus according to any one of the first aspect and the possible implementations of the first aspect.

It may be understood that any multi-spectral detection apparatus, core, computer-readable storage medium, computer program product, or the like provided above may be applied to the corresponding method provided above. Therefore, for beneficial effects that can be achieved by the multi-spectral detection apparatus, core, computer-readable storage medium, or computer program product, refer to the beneficial effects of the corresponding method. Details are not described herein again.

These aspects or other aspects in this application are more concise and comprehensible in the following descriptions.

### BRIEF DESCRIPTION OF DRAWINGS

FIG. 1 is a diagram of an architecture of an image photographing system according to an embodiment of this application;
FIG. 2 is a schematic of a structure of a part of a circuit of a multi-spectral detector in an image sensor according to an embodiment of this application;
FIG. 3 is a schematic of a structure of a part of a circuit of a multi-spectral detector according to an embodiment of this application;
FIG. 4 is a diagram of a structure of a multi-spectral detection apparatus according to an embodiment of this application;
FIG. 5 is a diagram of a structure of a multi-spectral detection apparatus according to an embodiment of this application;
FIG. 6 is a diagram of a structure of a multi-spectral detection apparatus according to an embodiment of this application;
FIG. 7 is a schematic of a structure of each pixel unit in a multi-spectral detection apparatus according to an embodiment of this application;
FIG. 8 is a schematic flowchart of an ambient light intensity detection method according to an embodiment of this application;
FIG. 9 is a diagram of combining single-channel spectral units in each spectral array into an all-pass channel according to an embodiment of this application;
FIG. 10 is a schematic flowchart of an ambient light type detection method according to an embodiment of this application;
FIG. 11 is a diagram of combining single-channel spectral units in each spectral array according to an embodiment of this application;
FIG. 12 is a diagram of combining same single-channel spectral units according to an embodiment of this application;
FIG. 13 is a schematic flowchart of a multi-spectral imaging method according to an embodiment of this application;
FIG. 14 is a diagram of combining pixel units in a spectral array according to an embodiment of this application;
FIG. 15 is a diagram of signal combination performed in different single-channel spectral units in a spectral array according to an embodiment of this application; and
FIG. 16 is a diagram of an architecture of a multi-spectral detection apparatus according to an embodiment of this application.

### DESCRIPTION OF EMBODIMENTS

The following describes the technical solutions in embodiments of this application with reference to the accompanying drawings in embodiments of this application. In the descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

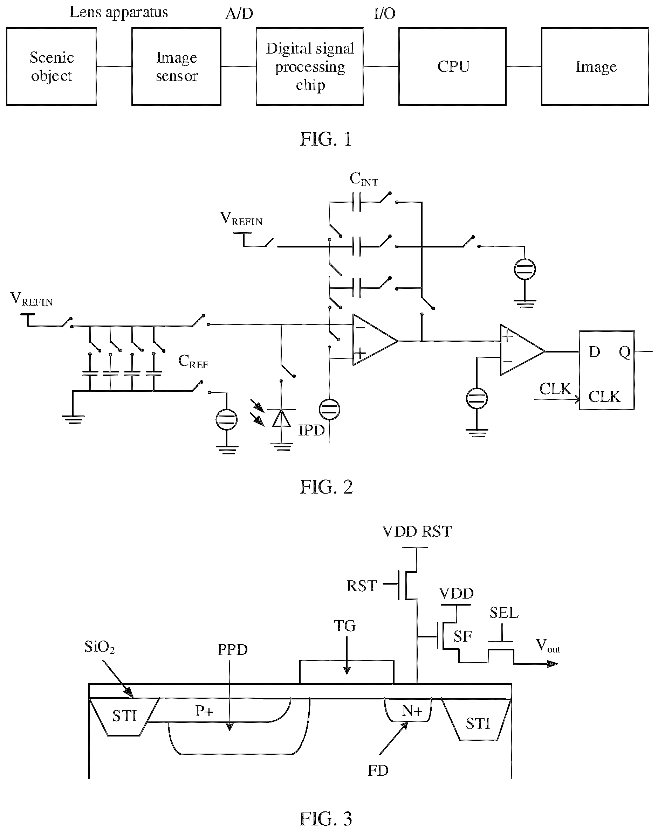

During image photographing, as shown in FIG. 1, a scenic object may be projected to a surface of an image sensor through an optical image generated by a lens (Lens) apparatus. Then, the optical image is converted into an electrical signal. The electrical signal is amplified by an operational amplification circuit. Automatic chroma control (Automatic Chroma Control, ACC) is performed, conversion is performed by an analog-to-digital (analog-to-digital, A/D) converter, and then a digital image signal is transmitted to a digital signal processing chip for processing. Then, a processed digital image signal is transmitted to a central processing unit (Central Processing Unit, CPU) through an input/output (Input/Output, I/O) interface. Finally, an image is output to a display.

During image photographing, white balance is needed. White balance is a capability of a camera to restore a white object in lighting conditions with different light sources. A color of a physical image photographed and restored by the camera should be consistent with that of a tested object observed by human eyes under the same lighting conditions. Therefore, in a white balance process, ambient light detection needs to be performed to provide accurate color reproduction for the image.

Currently, a multi-spectral technology is gradually applied to ambient light detection, and may also be applied to processes such as material identification, to provide richer information for accurate color reproduction. For example, in the fields of scientific research material detection devices, skin detection devices in the cosmetic industry, spectrum test devices in the industry, cameras in the mobile phone industry, and the like, the multi-spectral technology is gradually referred to as a mainstream solution.

For example, in some multi-spectral technologies, ambient light detection may be implemented based on IPDs and current collection ADCs, and each light sensitive channel implements specific spectrum screening through interference filtering. FIG. 2 shows a part of a circuit of an image sensor. The part of circuit may be understood as a core circuit of a multi-spectral detector, and may further include a peripheral logic control circuit of the core circuit. A PD in the figure is configured to respond to a received optical signal that is transmitted in a band. In other words, a spectrum obtained through screening is applied to the IPD. The IPD may respond to the optical signal, perform optical-to-electrical conversion on the optical signal to obtain a current signal, and transmit the current signal to the part of the circuit. When the current signal is transmitted to a current collection ADC, the current collection ADC may convert the current signal into a digital signal, and the digital signal is transmitted to a digital signal processing chip for processing. In the image sensor, each pixel location may correspond to one IPD. A circuit other than IPDs in the circuits shown in FIG. 2 may be considered as a current collection ADC circuit. The multi-spectral detector includes a plurality of IPDs and a plurality of current collection ADC circuits. Each IPD is coupled to one current collection ADC circuit, and one current collection ADC may be coupled to the plurality of IPDs.

A silicon (Si) surface of each IPD may be coated with an interference filtering film, and a quantity of layers and thickness of a film system are designed and manufactured for a designed band-pass spectrum, to form a final multi-spectral detector.

However, a single pixel (pixel) as a smallest light sensitive unit needs to occupy a large area. In addition, in a dark light scenario, a high-gain noise level of an ADC is poor, and therefore, high-resolution signal collection on an acceptable target surface of an architecture, for example, a mobile phone, cannot be implemented. In addition, dark light performance is poor, and effective luminance and spectral information detection in an ultra-night environment cannot be implemented.

In some other multi-spectral technologies, as shown in FIG. 3, a multi-spectral detector may implement high-resolution and low-noise photoelectric conversion and signal quantization based on a PIN photodiode (pin photodiode), a 4T readout structure, and a ramp-type ADC. However, a dynamic range of the multi-spectral detector shown in FIG. 3 is limited by an FD capacitor. Even if a multi-capacitor switching design is used, a high-dynamic capability in a case of unsaturation under sunlight cannot be implemented in a limited area.

The dynamic range may be understood as a maximum tone range from pure black to brightest white that can be photographed by a camera, and indicates a capability of the camera to record a gray level of an image. A larger dynamic range indicates richer captured gradation.

Therefore, this application proposes a multi-spectral detection apparatus. A circuit structure of a single pixel and a circuit structure of a peripheral circuit of the pixel are different from those in the conventional technology. A current signal flow obtained through photoelectric conversion can be controlled by using a switch, to support high-quality multi-spectral imaging with small pixels and low noise and ultra-high-dynamic range ambient light source type detection and ambient light intensity detection in a case of unsaturation under sunlight. In addition, a dark state detection capability is expanded.

In addition, this application may provide a multi-spectral component with a higher resolution, which is a multi-functional multi-spectral component, and may have functions of imaging, light source type detection, and light source intensity detection. Specifically, a new pixel structure provided in this application and a new combination readout manner may be used for implementation. In other words, the new pixel combination readout manner proposed in this application may implement a plurality of functions, for example, including high-resolution multi-spectral high-dynamic imaging that may implement better color effect, security, and health detection during imaging; high-dynamic multi-region ambient light intensity detection that may be used to assist in effect upgrade of a high-dynamic range (High-Dynamic Range, HDR) image; and high-dynamic multi-region ambient light type detection that may be used to assist in color reproduction accuracy and effect upgrade of a partition. In this way, an existing multi-spectral component can be upgraded, to generate benefits, as an independent multi-functional camera (camera), for a system-level high dynamic and an accurate color at controllable costs.

The multi-spectral detection apparatus provided in this application may be applied to a high-resolution and multi-functional high-spectral detector, and may be specifically applied to a plurality of application scenarios, for example, applied to a multi-spectral camera applied to a mobile phone, to implement high-resolution multi-spectral imaging and improve color accuracy; applied to multi-partition ambient light type detection that can be flexibly configured based on a scenario, to assist in implementing automatic white balance (Automatic white balance, AWB) of fine regions and implementing accurate color reproduction in a scenario with mixed color temperatures; and applied to multi-region ambient light intensity detection that can be flexibly configured based on a scenario, to assist in implementing more accurate auto exposure (Auto exposure, AE) control and more accurate high-dynamic range ratio (High-Dynamic Range ratio, HDR) configuration in a high-dynamic scenario. In addition, the multi-spectral detection apparatus also implements multi-spectral skin detection, face anti-counterfeit detection, and the like on a mobile phone.

For another example, the multi-spectral detection apparatus may alternatively be applied to a multi-spectral camera applied to a mobile phone, a watch, or an accessory, to implement material composition detection and health detection such as blood glucose, blood oxygen, and blood pressure detection.

For another example, the multi-spectral detection apparatus may alternatively be applied to the whole-house intelligence and in-vehicle fields, to implement liveness detection and assist in providing information needed in a security scenario.

The multi-spectral detection apparatus provided in this application may be applied to photosensitive sensor components such as an image sensor.

The following describes the multi-spectral detection apparatus provided in this application.

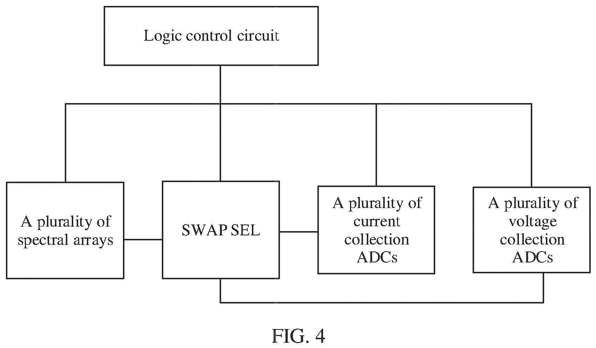

FIG. 4 shows a multi-spectral detection apparatus 40 according to this application. The multi-spectral detection apparatus includes a logic control circuit, a plurality of spectral arrays, a row-column control circuit (SWAP SEL), a plurality of current collection ADCs, and a plurality of voltage collection ADCs.

A current collection ADC in this application may be, for example, an integral ADC, or a current collection ADC of another type. A voltage collection ADC in this application may be, for example, a ramp-type ADC, or a voltage collection ADC of another type.

Each spectral array includes a plurality of single-channel spectral units, and each single-channel spectral unit in the plurality of single-channel spectral units includes a plurality of pixel units.

In this application, each spectral array may be understood as a smallest unit for ambient light type detection and a smallest unit for ambient light intensity detection.

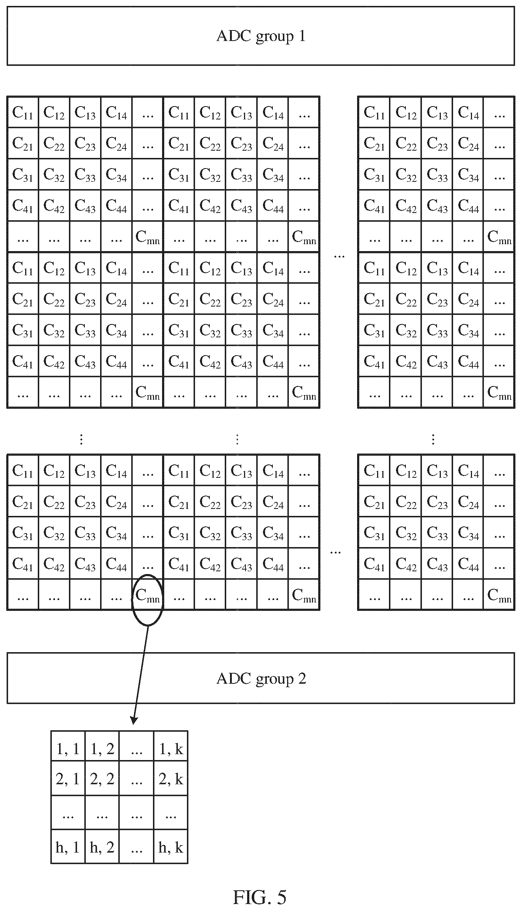

As shown in FIG. 5, an array formed by C₁₁, C₁₂, C₁₃, ..., and Cₘₙ may be understood as a spectral array, where a single C₁₁, C₁₂, ..., or Cₘₙ is a single-channel spectral unit, or is referred to as a spectral channel, and m and n are integers greater than or equal to 1. Each C₁₁ or C₁₂ ..., or Cₘₙ includes a plurality of pixel units of a same spectral channel: (1, 1), (1, 2), ..., and (h, k). In other words, (h, k) represents a smallest pixel unit, and indicates location information of the pixel unit.

An ADC group (group) 1 represents a plurality of voltage collection ADCs, and an ADC group (group) 2 represents a plurality of current collection analog-to-digital converters ADCs.

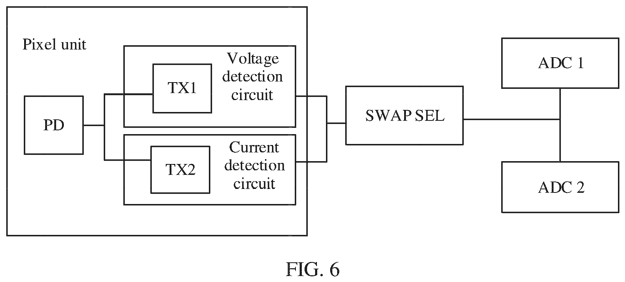

As shown in FIG. 6, for each pixel unit in a plurality of pixel units, each pixel unit is coupled to a row-column control circuit, one current collection ADC (ADC 2) in a plurality of current collection ADCs, and one voltage collection ADC in a plurality of voltage collection ADCs (ADC 1).

Each pixel unit includes a photoelectric detector PD, a voltage detection circuit, and a current detection circuit. The voltage detection circuit includes a first switch component TX1, and the current detection circuit includes a second switch component TX2.

A logic control circuit is configured to control the first switch component TX1 and the second switch component TX2 in each pixel unit, to perform imaging or ambient light detection in different working modes.

The logic control circuit is further configured to control the row-column control circuit SWAP SEL to perform imaging enhancement or ambient light detection enhancement on the plurality of pixel units in a plurality of spectral arrays in different signal combination manners.

Therefore, in this application, according to a newly designed circuit structure of the pixel units, working modes of the pixel units can be switched as needed. Specifically, a working mode of each pixel unit may be determined to be used for imaging or ambient light detection by turning on or turning off the first switch component TX1 and the second switch component TX2.

On the basis of this, in this application, the pixel units in the plurality of spectral arrays are combined by using the row-column control circuit, and ambient light detection enhancement or imaging enhancement is performed in the plurality of combination manners. In this way, high-resolution high-quality imaging and high-dynamic ambient light detection can be implemented in the plurality of combination manners of reading out a new pixel unit in the plurality of spectral arrays. In other words, this supports high-quality multi-spectral imaging with small pixels and low noise in multi-spectral processing, implements high-resolution signal collection, and improves dark light performance.

In some embodiments, the logic control circuit is configured to control the first switch component TX1 in each pixel unit to be turned on and the second switch component TX2 in each pixel unit to be turned off, to transmit, to the voltage collection ADC (ADC 1) via the first switch component TX1, a current signal obtained by performing optical-to-electrical conversion by the PD in each pixel unit, to perform imaging; or the logic control circuit is configured to control the first switch component TX1 in each pixel unit to be turned off and the second switch component TX2 in each pixel unit to be turned on, to transmit, to the current collection ADC (ADC 2) via the second switch component TX2, a current signal obtained by performing optical-to-electrical conversion by the PD in each pixel unit, to perform ambient light detection.

In other words, in this application, a plurality of spectral arrays can be arranged, to improve a capability of an architecture, for example, a mobile phone, for high-resolution signal collection on a target surface. In addition, a circuit structure of a single pixel unit provided in this application is different from an existing circuit structure of a single pixel. A current signal obtained by performing photoelectric conversion by the PD in a single pixel unit provided in this application may be transmitted to the ADC 1 via the first switch component TX1, or transmitted to the ADC 2 via the second switch component TX2. This is different from that in the conventional technology in which a current signal of a circuit structure of a single pixel unit can only be transmitted through one type of ADC.

In addition, in this application, signals of single-channel spectral units in the plurality of spectral arrays can be combined based on a preset group type. In other words, with reference to the new circuit structure of the single pixel unit provided in this application, a plurality of group types based on the single-channel spectral units are obtained. In this way, ambient light type or intensity detection under the plurality of group types can be implemented, and ultra-high-dynamic range ambient light detection can also be implemented. This resolves an existing problem that high-resolution imaging cannot be performed and a problem of ultra-high-dynamic range ambient light detection such as detection under sunlight.

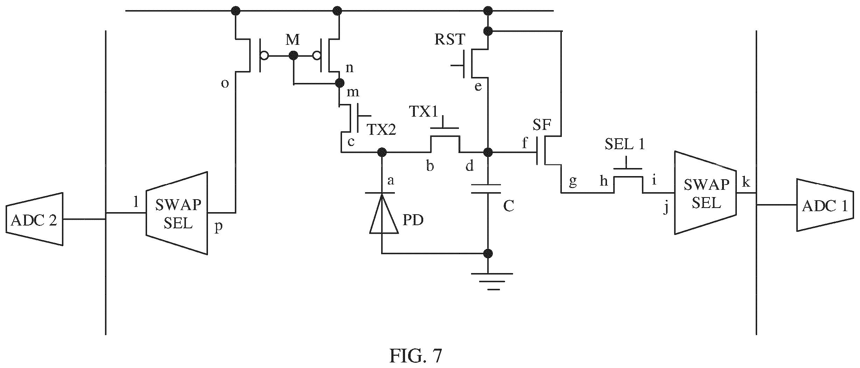

In some embodiments, based on the circuit structure of the pixel unit shown in FIG. 6, in this application, as shown in FIG. 7, the current detection circuit in each pixel unit further includes a current mirror M, and the voltage detection circuit in each pixel unit further includes a reset transistor RST, a source follower transistor SF, a capacitor C, and a row selector transistor SEL 1.

For each pixel unit, an output end a of the PD is coupled to a first end b of the first switch device TX1 and a first end c of the second switch device TX2, a second end d of the first switch device TX1 is coupled to a first end e of the reset transistor RST and a first end f of the source follower transistor SF, a second end g of the source follower transistor SF is coupled to a first end h of the row selector transistor SEL 1, and a second end i of the row selector SEL 1 is coupled to a first input end j of the row-column control circuit (SWAP SEL), a first output end k of the row-column control circuit (SWAP SEL) is coupled to the voltage collection ADC (ADC 1), a second output end 1 of the row-column control circuit (SWAP SEL) is coupled to the current collection ADC (ADC 2), a second end m of the second switch device TX2 is coupled to a first end n of the current mirror M, and a first output end o of the current mirror M is coupled to a second input end p of the row-column control circuit (SWAP SEL). The capacitor C is coupled between an input end of the PD and the second end d of the first switch component TX1.

It should be noted that the two row-column control circuits SWAP SELs shown in FIG. 7 are actually the same, that is, a same SWAP SEL is coupled to at least one ADC 1 and coupled to at least one ADC 2. In FIG. 7, a bitLine is a column signal line connected to the second end g of the source follower transistor SF, and an iLine is a column signal line connected to the end o of the current mirror M.

In other words, according to the circuit structure in FIG. 7, in addition to the PD, the first switch component TX1, and the second switch component TX2, each pixel unit further includes the current mirror M, the reset transistor RST, the source follower transistor SF, the capacitor C, and the row selector transistor SEL 1. Alternatively, there may be at least one row-column control circuit (SWAP SEL), each pixel unit is coupled to one of the at least one row-column control circuit (SWAP SEL), and each row-column control circuit (SWAP SEL) in the at least one row-column control circuit (SWAP SEL) is coupled to one of the plurality of ADCs 1 and coupled to one of the plurality of ADCs 2.

For a single pixel unit, the logic control circuit may control a current signal obtained by performing optical-to-electrical conversion by the PD in the pixel unit to flow through the first switch component TX1 or the second switch component TX2. When the current signal flows through the first switch component TX1, the current signal may be transmitted to the source follower transistor SF by using the TX1, and the source follower transistor SF may output the received current signal to the row selector transistor SEL 1 in a lossless manner. The row selector SEL 1 is configured to: In the spectral array, when pixel units in a row are determined to be selected based on an indication of the logic control circuit, a current signal of the pixel units in the row may be output to a row-column control circuit (SWAP SEL). The row-column control circuit (SWAP SEL) is configured to perform, in the spectral array, signal combination in the single-channel spectral unit based on a preset combination type and an indication of the logic control circuit.

When the current signal flows through the second switch component TX2, the current signal may be mirrored and transmitted to the row-column control circuit (SWAP SEL) by using the current mirror M, so that the row-column control circuit (SWAP SEL) performs signal combination in the single-channel spectral unit based on the preset combination type and the indication of the logic control circuit.

Based on the multi-spectral detection apparatus provided in this application, the following separately describes an ambient light intensity detection scenario in which the multi-spectral detection apparatus is applied to an ultra-high-dynamic scenario, an ambient light type detection scenario for an ultra-high-dynamic scenario, and a high-resolution high-dynamic multi-spectral imaging scenario. Certainly, the multi-spectral detection apparatus provided in this application is not limited to the three scenarios, and may be further applied to another scenario. This is not limited in this application.

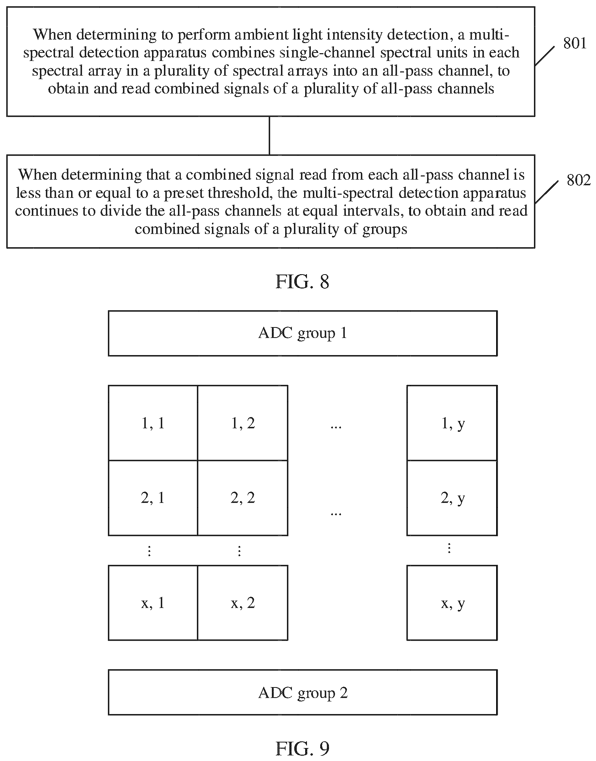

An embodiment of this application provides an ambient light intensity detection method in an ultra-high-dynamic scenario. As shown in FIG. 8, the method includes the following steps.

801: When determining to perform ambient light intensity detection, the multi-spectral detection apparatus combines single-channel spectral units in each spectral array in a plurality of spectral arrays into an all-pass channel, to obtain and read combined signals of a plurality of all-pass channels.

In some embodiments, when a logic control circuit in the multi-spectral detection apparatus receives an ambient light intensity detection indication, because a current collection analog-to-digital converter ADC has a higher-dynamic range detection capability, the logic control circuit may control a first switch component TX1 in each pixel unit in the plurality of spectral arrays to be turned off and a second switch component TX2 in each pixel unit to be turned on, and indicate a row-column control circuit SWAP SEL to control, in a form of a single spectral array, the row-column control circuit to perform signal combination by using all the single-channel spectral units in each spectral array as a group, where a signal obtained by performing signal combination in the group indicates an ambient light intensity in a spectral array region.

For example, it is assumed that a diagram of combining the single-channel spectral units in each spectral array into the all-pass channel is shown in FIG. 9. It may be understood that single-channel spectral units C₁₁, C₁₂, C₁₃, ..., and Cₘₙ in a spectral array are combined into an all-pass channel, to obtain an all-pass channel (1, 1) in FIG. 9, and single-channel spectral units C₁₁, C₁₂, C₁₃, ..., and Cₘₙ in another spectral array are combined into an all-pass channel, to obtain an all-pass channel (1, 2) in FIG. 9. In this way, after single-channel spectral units C₁₁, C₁₂, C₁₃, ..., and Cₘₙ in the plurality of spectral arrays are combined, all-pass channels that may be obtained include (1, 1), (1, 2), ..., and (x, y).

In some embodiments, a combination manner is not limited to charge combination, analog domain combination, and digital domain combination.

For a spectral array, charge combination may be understood as charge combination of a plurality of single-channel spectral units C₁₁, C₁₂, C₁₃, ..., and Cₘₙ, and is specifically combination of charges of pixel units (1, 1), (1, 2), ..., and (h, k) in the single-channel spectral unit C₁₁, charges of pixel units (1, 1), (1, 2), ..., and (h, k) in the single-channel spectral unit C₁₂, charges of pixel units (1, 1), (1, 2), ..., and (h, k) in the single-channel spectral unit C₁₃, ..., and charges of pixel units (1, 1), (1, 2), ..., and (h, k) in the single-channel spectral unit Cₘₙ. Charge combination of two pixel units may be understood as that second switch components TX2 coupled to the two pixel units are simultaneously turned on, so that current signals of the two pixel units obtained through optical-to-electrical conversion are transmitted to a same current path and transmitted to the row-column control circuit SWAP SEL. Similarly, current signals of pixel units in each spectral array are combined, to obtain current signals of all-pass channels after charges of all single-channel spectral units in a same spectral array are combined.

For a spectral array, analog domain combination may be understood as analog domain combination of the plurality of single-channel spectral units C₁₁, C₁₂, C₁₃, ..., and Cₘₙ, and is specifically combination of analog domain signals of pixel units (1, 1), (1, 2), ..., and (h, k) in the single-channel spectral unit C₁₁, analog domain signals of pixel units (1, 1), (1, 2), ..., and (h, k) in the single-channel spectral unit C₁₂, analog domain signals of pixel units (1, 1), (1, 2), ..., and (h, k) in the single-channel spectral unit C₁₃, ..., and analog domain signals of pixel units (1, 1), (1, 2), ..., and (h, k) in the single-channel spectral unit Cₘₙ. Analog domain combination of two pixel units may be understood as that a current signal obtained by performing optical-to-electrical conversion on each pixel unit may be transmitted on a current path of the pixel unit, but analog signal combination is performed when the current signal is transmitted to the ADC 2. Similarly, analog signals of pixel units in each spectral array are combined at the ADC 2, to obtain analog signals of all-pass channels after analog signals of all single-channel spectral units in a same spectral array are combined, and input the analog signals to at least one ADC 2.

For a spectral array, digital domain combination may be understood as digital domain combination of a plurality of single-channel spectral units C₁₁, C₁₂, C₁₃, ..., and Cₘₙ, and is specifically combination of digital domain signals of pixel units (1, 1), (1, 2), ..., and (h, k) in the single-channel spectral unit C₁₁, digital domain signals of pixel units (1, 1), (1, 2), ..., and (h, k) in the single-channel spectral unit C₁₂, digital domain signals of pixel units (1, 1), (1, 2), ..., and (h, k) in the single-channel spectral unit C₁₃, ..., and digital domain signals of pixel units (1, 1), (1, 2), ..., and (h, k) in the single-channel spectral unit Cₘₙ. Digital domain combination of two pixel units may be understood as that a current signal obtained by performing optical-to-electrical conversion on each pixel unit may be transmitted to the ADC 2 on a current path of the pixel unit, and digital signals obtained after analog-to-digital conversion is performed by the ADC 2 are combined (for example, a result obtained after weighted averaging is performed). Similarly, digital signals obtained after analog-to-digital conversion is performed on current signals of pixel units in each spectral array in the ADC 2 are accumulated (combined), to obtain digital signals of all-pass channels after digital signals of all single-channel spectral units in a same spectral array are accumulated.

802: When determining that a combined signal read from each all-pass channel is less than or equal to a preset threshold, the multi-spectral detection apparatus continues to divide the plurality of all-pass channels at equal intervals, to obtain and read combined signals of a plurality of groups.

If the logic control circuit in the multi-spectral detection apparatus determines that the combined signal read out from each all-pass channel is less than the preset threshold, it may be considered that an ambient light intensity determined based on a result of combining the signals of C₁₁, C₁₂, ..., and Cₘₙ of an all-pass channel is still very weak, and the plurality of all-pass channels (1, 1), (1, 2), ..., and (x, y) obtained in FIG. 9 may be further divided at equal intervals to obtain a plurality of groups. A division result may be represented as (x/k1, y/k2), (k1 or k2=1, 2, 3...) groups, or referred to as (x/k1, y/k2) pixel regions, to implement noise reduction or increase sensitivity. A combination manner is not limited to charge combination, analog domain combination, digital domain combination, and the like.

In this way, a combined signal of the (x/k1, y/k2) groups (pixel regions) obtained after division may be quantized by using at least one ADC 2 in an ADC group 2, to obtain ambient light intensities, or referred to as ambient light luminance, of different groups or pixel regions.

In other words, step 802 is equivalent to the following: The logic control circuit is configured to: when it is determined to perform ambient light intensity detection, control the first switch component in each pixel unit to be turned off and the second switch component in each pixel unit to be turned on; and control the row-column control circuit to divide the plurality of spectral arrays into regions, and perform signal combination by using single-channel spectral units in all spectral arrays in each region as a group, where a signal obtained by performing signal combination in the group indicates an ambient light intensity in a spectral array region.

In some embodiments, when being configured to read out a signal of each bottom-layer pixel unit, the logic control circuit in this application may be dynamically adapted to a low gain or a high gain based on an ambient light intensity of a current frame of image, to further meet a requirement for a dynamic range of light intensity detection.

In other words, when determining that the ambient light intensity of the current frame of image is greater than or equal to a preset threshold, the logic control circuit reduces exposure and/or a gain of each pixel unit of a next frame of image when obtaining a signal of each pixel unit of the next frame of image; or
when determining that an ambient light intensity of a current frame of image is less than a preset threshold, the logic control circuit increases exposure and/or a gain of each pixel unit of a next frame of image when obtaining a signal of each pixel unit of the next frame of image.

In other words, gains of a plurality of pixel units in the plurality of spectral arrays are not completely the same. When determining that the ambient light intensity of the current frame of image is high, before the next frame of image is obtained, that is, when an optical signal of a pixel unit needed by the next frame of image is collected, the logic control circuit may appropriately reduce the gain of the pixel unit. On the contrary, when the ambient light intensity of the current frame of image is low, the gain of the pixel unit may be appropriately increased. In this multi-gain reading manner of the bottom-layer pixel unit, a dynamic range capability of detectable ambient light can be further enhanced.

Therefore, according to the ambient light intensity detection method provided in this application, for each pixel unit, the part of the circuit (including the capacitor C) coupled to the first switch component TX1 in the pixel unit does not work, to avoid a problem of saturation caused by signal clamping (clamping). Therefore, the method is applicable to high-dynamic range light sensing detection. In addition, in this application, different current summation manners (step 801 or step 802) may be used to meet detection requirements of ambient light of different intensities.

In an existing solution for ambient light intensity detection, only an ambient light intensity of a single point (a single pixel unit) can be detected, and an actual dynamic range of an environment cannot be effectively detected. Therefore, the existing solution cannot effectively assist video post-production software (After Effect, AE) in accurate and rapid configuration or precise configuration of different high-dynamic range (High-Dynamic Range, HDR) ratios (ratios). This application can implement partitioning (grouping) of a plurality of pixel units, and is applicable to different ambient light luminance scenarios by using flexible signal combination manners, to implement a balance between precision of ambient light detection and resolution.

In the ambient light intensity detection solution provided in this application, high-dynamic ambient light intensity information of the plurality of regions can be used to assist another camera in performing accurate and rapid AE determining or accurate AE configuration of different HDR ratios in an HDR mode, and can further assist an HDR fusion algorithm to adapt to a more appropriate compression curve.

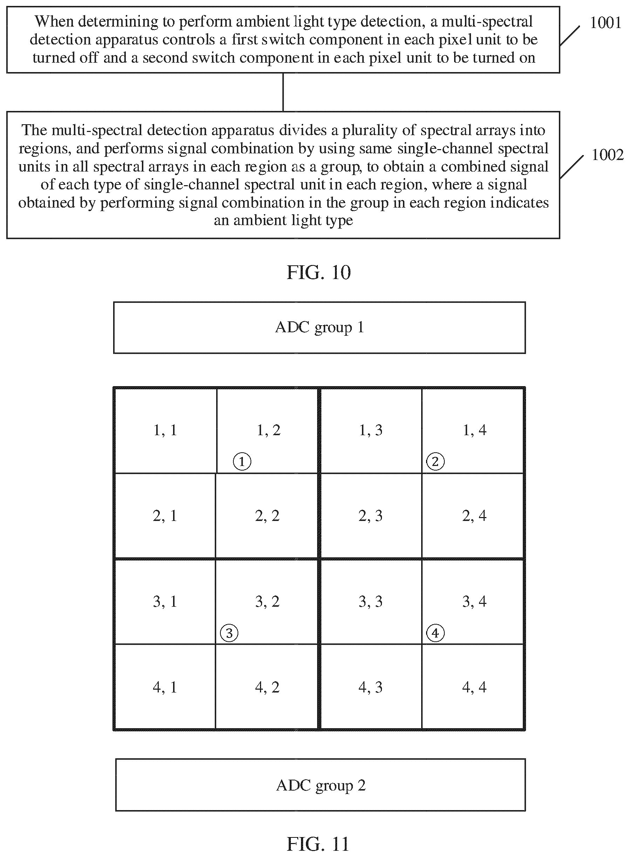

An embodiment of this application provides an ambient light type detection method for an ultra-high-dynamic scenario. As shown in FIG. 10, the method includes the following steps.

1001: When determining to perform ambient light type detection, a multi-spectral detection apparatus controls a first switch component in each pixel unit to be turned off and a second switch component in each pixel unit to be turned on.

In other words, when determining to perform ambient light type detection, a logic control unit may control a first switch component TX1 in each pixel unit to be turned off and a second switch component TX2 in each pixel unit to be turned on, and flow, by using the TX2 and a current mirror M, a current signal obtained by performing optical-to-electrical conversion by a PD in each pixel to a row-column control circuit.

1002: The multi-spectral detection apparatus divides a plurality of spectral arrays into regions, and performs signal combination by using same single-channel spectral units in all spectral arrays in each region as a group, to obtain a combined signal of each type of single-channel spectral unit in each region, where a signal obtained by performing signal combination in the group in each region indicates an ambient light type.

In some embodiments, the logic control circuit may indicate the row-column control circuit to divide the plurality of spectral arrays into regions. Herein, division may be understood as combining and read out the (1, 1), (1, 2), ..., and (x, y) spectral arrays shown in FIG. 9 as (x/k1, y/k2) (k1 or k2=1, 2, 3...) arrays. Different from step 801, the row-column control circuit does not need to combine the plurality of single-channel spectral units in each spectral array, but combines signals of the same single-channel spectral units in each region.

As shown in FIG. 11, it is assumed that x=y=4, k1=k2=2, and there are 16 spectral arrays in total, which are divided into four partitions, or referred to as four groups: ①, ②, ③, and ④. The partition ① includes four spectral arrays (1, 1), (1, 2), (2, 1), and (2,2). The partition ② includes four spectral arrays (1, 3), (1, 4), (2, 3), and (2, 4). The partition ③ include four spectral arrays (3, 1), (3, 2), (4, 1), and (4, 2). The partition ④ includes four spectral arrays (3, 3), (3, 4), (4, 3), and (4, 4).

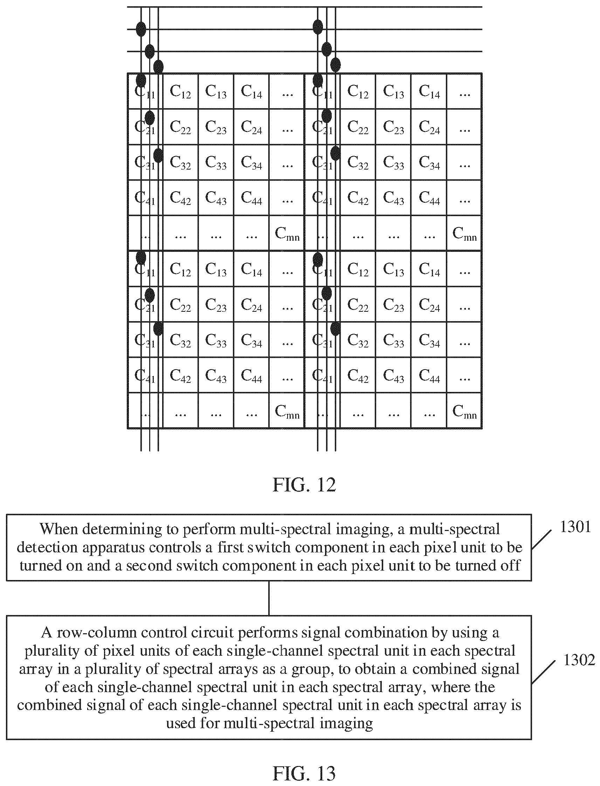

As shown in FIG. 12, the four spectral arrays in the partition ① are used as an example. Same single-channel spectral units in the four spectral arrays may be used as a group for signal combination. In other words, signals of pixel units in four single-channel spectral units C₁₁ in the four spectral arrays are combined, signals of pixel units in four single-channel spectral units C₂₁ in the four spectral arrays are combined, signals of pixel units in four single-channel spectral units C₃₁ in the four spectral arrays are combined, ..., and signals of pixel units in four single-channel spectral units Cₘₙ in the four spectral arrays are combined. In this way, combined signals of each type of single-channel spectral unit in the partition ① may be obtained. For the other three partitions, similar signal combination is also performed.

A combination manner of same single-channel spectral units or same spectral channels in each partition is not limited to the foregoing charge combination, analog domain combination, and digital domain combination.

In some embodiments, the logic control circuit may adapt a division and combination manner based on a requirement of a dynamic range and detection precision of an ambient light type, that is, appropriately determine values of k1 and k2. For example, when a current frame of image is imaged, if an ambient light intensity is determined to be high, values of k1 and k2 may be appropriately increased, that is, a quantity of spectral arrays in each partition is small. When a current frame of image is imaged, if an ambient light intensity is determined to be low, values of k1 and k2 may be appropriately reduced, that is, a quantity of spectral arrays in each partition is large, to improve ambient light type detection precision.

It may be understood that, after the combined signals are quantized by the ADC 2, spectral response information of different partitions may be obtained.

In some embodiments, in a dark light scenario, a scenario in which a dynamic range is low, or a scenario in which a light source is complex, the logic control unit may alternatively control the first switch component TX1 to be turned on and the second switch component TX2 to be turned off. In this way, the combined signals in step 1002 are quantized by the ADC 1. This is because the ADC 1 has a strong capability of quantizing dark light.

In some embodiments, a signal readout manner of each bottom-layer pixel unit may be dynamically adapted to a low gain or a high gain based on ambient light luminance detection information of the current frame of image, to further meet a requirement for a dynamic range of light intensity detection. A specific implementation is similar to a gain adaptation process in step 802.

Therefore, according to the ambient light type detection method for an ultra-high-dynamic scenario provided in this application, the plurality of spectral arrays can be partitioned, and flexible signal combination manners can be used. Therefore, the method is applicable to scenarios with different ambient light luminance, to implement a balance between precision of ambient light type detection and resolution, and avoid a problem of saturation caused by signal clamping. Therefore, the method is applicable to high-dynamic light sensing detection. Multi-region high-dynamic multi-channel spectral information can be used to assist another camera in region-based environment type detection and region-based AWB parameter adaptation, and assist in more accurate color reproduction in a single or mixed color temperature scenario.

An embodiment of this application provides a multi-spectral imaging method. As shown in FIG. 13, the method includes the following steps.

1301: When determining to perform multi-spectral imaging, a multi-spectral detection apparatus controls a first switch component in each pixel unit to be turned on and a second switch component in each pixel unit to be turned off.

Because a voltage collection ADC, namely, the ADC 1 in this application, may be used for correlated double-sampling quantization of a voltage signal, when determining that multi-spectral imaging needs to be performed, a logic control circuit may flow a current signal obtained by performing optical-to-electrical conversion on a pixel unit in each single-channel spectral unit in a spectral array to the voltage collection ADC group 1.

1302: Control a row-column control circuit to perform signal combination by using a plurality of pixel units of each single-channel spectral unit in each spectral array in a plurality of spectral arrays as a group, to obtain a combined signal of each single-channel spectral unit in each spectral array, where the combined signal of each single-channel spectral unit in each spectral array is used for multi-spectral imaging.

In some embodiments, the logic control circuit may control each pixel unit of each single-channel spectral unit in each spectral array to separately input a current signal obtained through optical-to-electrical conversion to the ADC 1 for readout, to obtain a digital signal. In other words, current signals obtained through optical-to-electrical conversion are performed on bottom-layer pixel units of same spectral channels may be separately output to the ADC 1 and quantized, to improve image resolution in a highlight scenario.

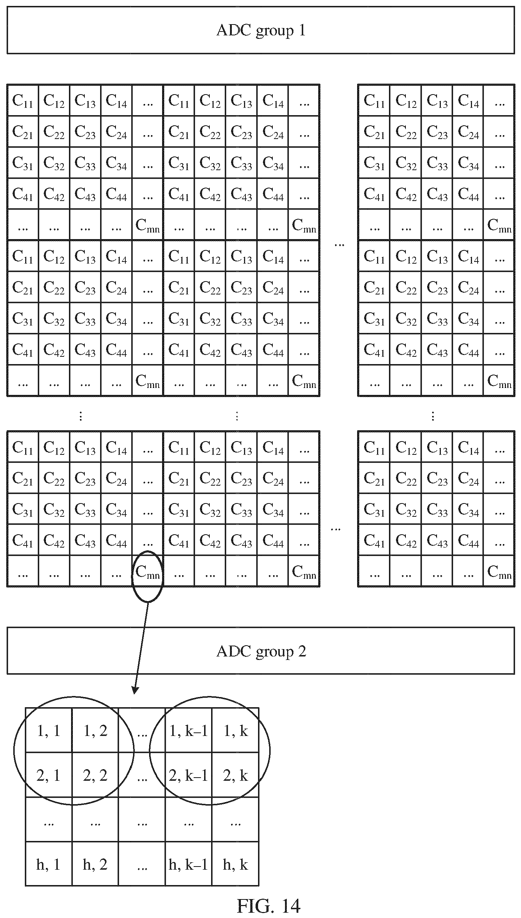

In some embodiments, to implement color reproduction and an image effect of a higher color gamut, the logic control circuit may control the row-column control circuit to partition or group the pixel units (pixel unit arrays) of each single-channel spectral unit in each spectral array in the plurality of spectral arrays, and combine signals of groups or partitions. As shown in FIG. 14, the row-column control circuit may combine signals of every four adjacent pixel units of the plurality of pixels in each single-channel spectral unit as a group. As shown in FIG. 14, pixel units (1, 1), (1, 2), (2, 1), and (2, 2) are combined as a group, and pixel units (1, k-1), (1, k), (2, k-1), and (2, k) are combined as a group. A combination manner is not limited to charge combination, analog domain combination, or digital domain combination.

In some embodiments, to implement color reproduction and an image effect of a higher color gamut, the logic control circuit may control the row-column control circuit to group the plurality of single-channel spectral units in each spectral array in the plurality of spectral arrays, where each group includes a plurality of adjacent single-channel spectral units, and
control the row-column control circuit to perform signal combination in each group of each spectral array, to obtain a combined signal of each group of each spectral array, where the combined signal of each group of each spectral array is used for multi-spectral imaging.

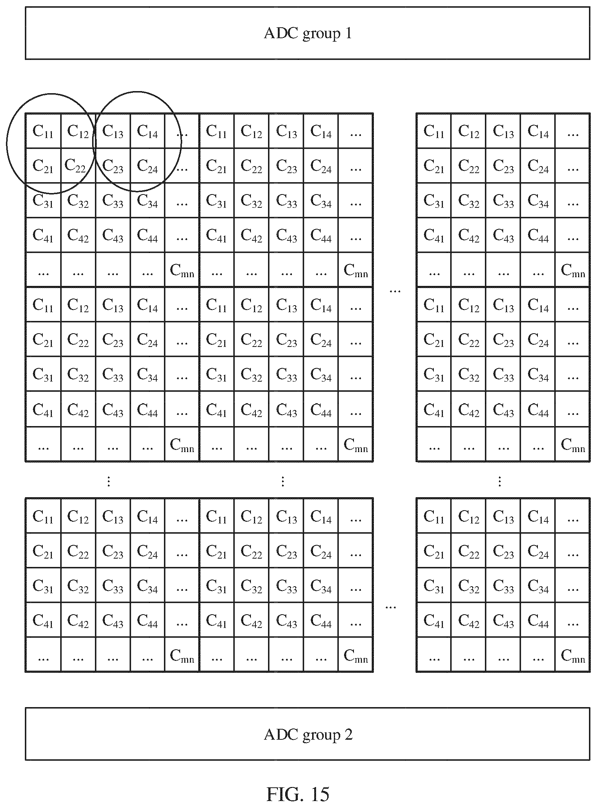

In other words, the row-column control circuit may combine signals of different single-channel spectral units in each spectral array. As shown in FIG. 15, for a spectral array, a row-column control circuit may combine signals of four adjacent single-channel spectral units C₁₁, C₁₂, C₂₁, and C₂₂ in the spectral array into a group, and combine signals of single-channel spectral units C₁₃, C₁₄, C₂₃, and C₂₄ into a group. Although this sacrifices specific color gamut space, a color and dynamic range of an image can be improved.

In some embodiments, a signal readout manner of each bottom-layer pixel unit may be dynamically adapted to a low gain, a high gain, or a combination of high and low gains for each pixel unit based on luminance information of a current frame of image.

In some embodiments, bottom-layer pixel units of same single-channel spectral units may also be configured with different exposure or gains, and perform high-dynamic synthesis compression.

In some embodiments, Bayer image re-generation (remosaic) of a plurality of single-channel spectral units may be completed on a chip or on a platform side.

Therefore, the multi-spectral imaging method provided in this application may be used for hyper-spectral imaging, and color reproduction and an image effect of a higher color gamut can be implemented by using high-resolution high-dynamic multi-spectral information. Compared with an existing solution in which a multi-spectral effect and a high-dynamic effect cannot be effectively and flexibly considered, this application can implement high-resolution high-spectral imaging, balance resolution and color accuracy, implement low noise, and is applicable to high-quality image restoration and night scene effect improvement.

It may be understood that, to implement the foregoing functions, the multi-spectral detection apparatus includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that module division in this embodiment is an example and is merely logical function division. During actual implementation, there may be another division manner.

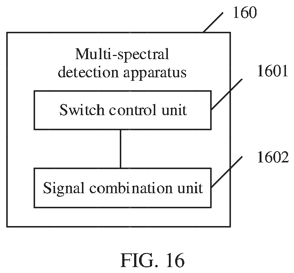

In a case in which each functional module is obtained through division based on each corresponding function, FIG. 16 is a possible diagram of composition of a multi-spectral detection apparatus 160 in the foregoing embodiments. As shown in FIG. 16, the multi-spectral detection apparatus 160 may include a switch control unit 1601 and a signal combination unit 1602.

The signal combination unit 1602 may be configured to support the multi-spectral detection apparatus 160 in performing the foregoing step 801, step 802, step 1002, step 1302, and the like, and/or another process of the technology described in this specification.

The switch control unit 1601 may be configured to support the multi-spectral detection apparatus 160 in performing the foregoing step 1001, step 1301, and the like, and/or used in another process of the technology described in this specification.

It should be noted that all related content of the steps in the foregoing method embodiments may be cited in the function descriptions of corresponding functional modules. Details are not described herein again.

The multi-spectral detection apparatus 160 provided in this embodiment is configured to perform the foregoing multi-spectral processing method, and therefore can achieve the same effect as those of the foregoing implementation method.

When an integrated unit is used, the multi-spectral detection apparatus 160 may include a processing module, a storage module, and a communication module. The processing module may be configured to control and manage an action of the multi-spectral detection apparatus 160, for example, may be configured to support the multi-spectral detection apparatus 160 in performing the steps performed by the switch control unit 1601 and the signal combination unit 1602. The storage module may be configured to support the multi-spectral detection apparatus 160 in storing program code, data, and the like. The communication module may be configured to support communication between the multi-spectral detection apparatus 160 and another device.

The processing module may be a processor or a controller. The processor may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device that interacts with another electronic device, for example, a radio frequency circuit, a Bluetooth chip, or a Wi-Fi chip.

An embodiment of this application further provides a computer storage medium. The computer storage medium stores computer instructions. When the computer instructions are run on an electronic device, the electronic device is enabled to perform the related method steps, to implement the antenna gain adjustment method in the foregoing embodiments.

An embodiment of this application further provides a computer program product. When the computer program product runs on a computer, the computer is enabled to perform the foregoing related steps, to implement the antenna gain adjustment method performed by the electronic device in the foregoing embodiments.

In addition, an embodiment of this application further provides an apparatus. The apparatus may be specifically a chip, a component, or a module. The apparatus may include a processor and a memory that are connected. The memory is configured to store computer-executable instructions, and when the apparatus runs, the processor may execute the computer-executable instructions stored in the memory, to enable the chip to perform the multi-spectral processing method performed by the electronic device in the foregoing method embodiments.

The multi-spectral detection apparatus, the computer storage medium, the computer program product, or the chip provided in embodiments is configured to perform a corresponding method provided above. Therefore, for beneficial effects that can be achieved by the multi-spectral detection apparatus, the computer storage medium, the computer program product, or the chip, refer to the beneficial effects of the corresponding method provided above. Details are not described herein again.

Based on the descriptions about the foregoing implementations, a person skilled in the art may understand that, for a purpose of convenient and brief description, division into the foregoing functional modules is used as an example for illustration. During actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of software product. The software product is stored in a storage medium and includes several instructions for indicating a device (which may be a single-chip microcomputer, a chip, or the like) or a processor (processor) to perform all or some of the steps of the methods described in embodiments of this application. The storage medium includes various media that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A multi-spectral detection apparatus (160),
wherein the multi-spectral detection apparatus comprises a logic control circuit, a plurality of spectral arrays, a row-column control circuit, a plurality of current collection analog-to-digital converters ADCs, and a plurality of voltage collection ADCs;
each spectral array comprises a plurality of single-channel spectral units, and each single-channel spectral unit in the plurality of single-channel spectral units comprises a plurality of pixel units;
for each pixel unit in the plurality of pixel units, each pixel unit is coupled to the row-column control circuit, one current collection ADC in the plurality of current collection ADCs, and one voltage collection ADC in the plurality of voltage collection ADCs;
each pixel unit comprises a photoelectric detector PD, a voltage detection circuit, and a current detection circuit, wherein the voltage detection circuit comprises a first switch component, and the current detection circuit comprises a second switch component;
the logic control circuit is configured to control the first switch component and the second switch component in each pixel unit, to perform imaging or ambient light detection in different working modes; and
the logic control circuit is further configured to control the row-column control circuit to perform imaging enhancement or ambient light detection enhancement on the plurality of pixel units in the plurality of spectral arrays in different signal combination manners.

2. The multi-spectral detection apparatus (160) according to claim 1, wherein
the logic control circuit is configured to control the first switch component in each pixel unit to be turned on and the second switch component in each pixel unit to be turned off, to transmit, to the voltage collection ADC via the first switch component, a current signal obtained by performing optical-to-electrical conversion by the PD in each pixel unit, to perform imaging; or the logic control circuit is configured to control the first switch component in each pixel unit to be turned off and the second switch component in each pixel unit to be turned on, to transmit, to the current collection ADC via the second switch component, a current signal obtained by performing optical-to-electrical conversion by the PD in each pixel unit, to perform ambient light detection.

3. The multi-spectral detection apparatus (160) according to claim 2, wherein the current detection circuit in each pixel unit further comprises a current mirror, and the voltage detection circuit in each pixel unit further comprises a reset transistor, a source follower transistor, and a row selector transistor; and
for each pixel unit, an output end of the PD is coupled to a first end of the first switch component and a first end of the second switch component, a second end of the first switch component is coupled to a first end of the reset transistor and a first end of the source follower transistor, a second end of the source follower transistor is coupled to a first end of the row selector transistor, a second end of the row selector transistor is coupled to a first input end of the row-column control circuit, a first output end of the row-column control circuit is coupled to the voltage collection ADC, a second output end of the row-column control circuit is coupled to the current collection ADC, a second end of the second switch component is coupled to a first end of the current mirror, and a first output end of the current mirror is coupled to a second input end of the row-column control circuit.

4. The multi-spectral detection apparatus (160) according to any one of claims 1 to 3, wherein the logic control circuit is configured to:
when it is determined to perform ambient light intensity detection, control the first switch component in each pixel unit to be turned off and the second switch component in each pixel unit to be turned on; and
control, in a form of a single spectral array, the row-column control circuit to perform signal combination by using all the single-channel spectral units in each spectral array as a group, wherein a signal obtained by performing signal combination in the group indicates an ambient light intensity in a spectral array region.

5. The multi-spectral detection apparatus (160) according to any one of claims 1 to 3, wherein the logic control circuit is configured to:
when it is determined to perform ambient light intensity detection, control the first switch component in each pixel unit to be turned off and the second switch component in each pixel unit to be turned on; and
control the row-column control circuit to divide the plurality of spectral arrays into regions, and perform signal combination by using single-channel spectral units in all spectral arrays in each region as a group, wherein a signal obtained by performing signal combination in the group indicates an ambient light intensity in a spectral array region.

6. The multi-spectral detection apparatus (160) according to any one of claims 1 to 3, wherein the logic control circuit is configured to:
when it is determined to perform ambient light type detection, control the first switch component in each pixel unit to be turned off and the second switch component in each pixel unit to be turned on (1001); and
control the row-column control circuit to divide the plurality of spectral arrays into regions, and perform signal combination by using same single-channel spectral units in all spectral arrays in each region as a group, to obtain a combined signal of each type of single-channel spectral unit in each region, wherein a signal obtained by performing signal combination in the group in each region indicates an ambient light type (1002).

7. The multi-spectral detection apparatus (160) according to any one of claims 1 to 3, wherein the logic control circuit is configured to:
when it is determined to perform multi-spectral imaging, control the first switch component in each pixel unit to be turned on and the second switch component in each pixel unit to be turned off (1301); and
control the row-column control circuit to perform signal combination by using the plurality of pixel units of each single-channel spectral unit in each spectral array in the plurality of spectral arrays as a group, to obtain a combined signal of each single-channel spectral unit in each spectral array, wherein the combined signal of each single-channel spectral unit in each spectral array is used for multi-spectral imaging (1302).

8. The multi-spectral detection apparatus (160) according to claim 7, wherein the logic control circuit is configured to:
when it is determined to perform multi-spectral imaging, control the first switch component in each pixel unit to be turned on and the second switch component in each pixel unit to be turned off;
control the row-column control circuit to group the plurality of single-channel spectral units in each spectral array in the plurality of spectral arrays, wherein each group comprises a plurality of adjacent single-channel spectral units; and
control the row-column control circuit to perform signal combination in each group of each spectral array, to obtain a combined signal of each group of each spectral array, wherein the combined signal of each group of each spectral array is used for multi-spectral imaging.

9. The multi-spectral detection apparatus (160) according to any one of claims 4 to 8, wherein signal combination comprises:
charge combination, analog domain combination, or digital domain combination.

10. The multi-spectral detection apparatus (160) according to any one of claims 4 to 8, wherein the logic control circuit is further configured to:
when it is determined that an ambient light intensity of a current frame of image is greater than or equal to a preset threshold, reduce exposure and/or a gain of each pixel unit of a next frame of image when obtaining a signal of each pixel unit of the next frame of image; or
when it is determined that an ambient light intensity of a current frame of image is less than a preset threshold, increase exposure and/or a gain of each pixel unit of a next frame of image when obtaining a signal of each pixel unit of the next frame of image.

11. A multi-spectral processing method, applied to a multi-spectral detection apparatus (160), wherein the multi-spectral detection apparatus comprises a logic control circuit, a plurality of spectral arrays, a row-column control circuit, a plurality of current collection analog-to-digital converters ADCs, and a plurality of voltage collection ADCs, wherein
each spectral array comprises a plurality of single-channel spectral units, and each single-channel spectral unit in the plurality of single-channel spectral units comprises a plurality of pixel units;
for each pixel unit in the plurality of pixel units, each pixel unit is coupled to the row-column control circuit, one current collection ADC in the plurality of current collection ADCs, and one voltage collection ADC in the plurality of voltage collection ADCs;
each pixel unit comprises a photoelectric detector PD, a voltage detection circuit, and a current detection circuit, wherein the voltage detection circuit comprises a first switch component, and the current detection circuit comprises a second switch component; and
the method comprises:
controlling, by the multi-spectral detection apparatus, the logic control circuit to control the first switch component and the second switch component in each pixel unit, to perform imaging or ambient light detection in different working modes; and
controlling, by the multi-spectral detection apparatus, the logic control circuit to control the row-column control circuit to perform imaging enhancement or ambient light detection enhancement on the plurality of pixel units in the plurality of spectral arrays in different signal combination manners.

12. The method according to claim 11, wherein the controlling, by the multi-spectral detection apparatus (160), the logic control circuit to control the first switch component and the second switch component in each pixel unit, to perform imaging or ambient light detection in different working modes comprises:
controlling, by the multi-spectral detection apparatus, the logic control circuit to be configured to turn on the first switch component in each pixel unit and turn off the second switch component in each pixel unit, to transmit, to the voltage collection ADC via the first switch component, a current signal obtained by performing optical-to-electrical conversion by the PD in each pixel unit, to perform imaging; or
controlling, by the multi-spectral detection apparatus, the logic control circuit to be configured to turn off the first switch component in each pixel unit and turn on the second switch component in each pixel unit, to transmit, to the current collection ADC via the second switch component, a current signal obtained by performing optical-to-electrical conversion by the PD in each pixel unit, to perform ambient light detection.

13. The method according to claim 11, wherein the current detection circuit in each pixel unit further comprises a current mirror, and the voltage detection circuit in each pixel unit further comprises a reset transistor, a source follower transistor, and a row selector transistor; and
for each pixel unit, an output end of the PD is coupled to a first end of the first switch component and a first end of the second switch component, a second end of the first switch component is coupled to a first end of the reset transistor and a first end of the source follower transistor, a second end of the source follower transistor is coupled to a first end of the row selector transistor, a second end of the row selector transistor is coupled to a first input end of the row-column control circuit, a first output end of the row-column control circuit is coupled to the voltage collection ADC, a second output end of the row-column control circuit is coupled to the current collection ADC, a second end of the second switch component is coupled to a first end of the current mirror, and a first output end of the current mirror is coupled to a second input end of the row-column control circuit.

14. The method according to any one of claims 11 to 13, wherein the controlling, by the multi-spectral detection apparatus (160), the logic control circuit to control the row-column control circuit to perform imaging enhancement or ambient light detection enhancement on the plurality of pixel units in the plurality of spectral arrays in different signal combination manners comprises:
when it is determined to perform ambient light intensity detection, controlling the first switch component in each pixel unit to be turned off and the second switch component in each pixel unit to be turned on; and
controlling, in a form of a single spectral array, the row-column control circuit to perform signal combination by using all the single-channel spectral units in each spectral array as a group, wherein a signal obtained by performing signal combination in the group indicates an ambient light intensity in a spectral array region.

15. The method according to any one of claims 11 to 13, wherein the controlling, by the multi-spectral detection apparatus (160), the logic control circuit to control the row-column control circuit to perform imaging enhancement or ambient light detection enhancement on the plurality of pixel units in the plurality of spectral arrays in different signal combination manners comprises:
when it is determined to perform ambient light intensity detection, controlling the first switch component in each pixel unit to be turned off and the second switch component in each pixel unit to be turned on; and
controlling the row-column control circuit to divide the plurality of spectral arrays into regions, and performing signal combination by using single-channel spectral units in all spectral arrays in each region as a group, wherein a signal obtained by performing signal combination in the group indicates an ambient light intensity in a spectral array region.

## Patentansprüche

1. Multispektrale Detektionsvorrichtung (160),
wobei die multispektrale Detektionsvorrichtung eine Logiksteuerschaltung, eine Vielzahl von Spektralanordnungen, eine Zeilen-Spalten-Steuerschaltung, eine Vielzahl von Stromerfassungs-Analog-Digital-Wandlern, Stromerfassungs-ADCs, und eine Vielzahl von Spannungserfassungs-ADCs umfasst;
jede Spektralanordnung eine Vielzahl von Einzelkanal-Spektraleinheiten umfasst und jede Einzelkanal-Spektraleinheit in der Vielzahl von Einzelkanal-Spektraleinheiten eine Vielzahl von Pixeleinheiten umfasst;
für jede Pixeleinheit in der Vielzahl von Pixeleinheiten jede Pixeleinheit mit der Zeilen-Spalten-Steuerschaltung, einem Stromerfassungs-ADC in der Vielzahl von Stromerfassungs-ADCs und einem Spannungserfassungs-ADC in der Vielzahl von Spannungserfassungs-ADCs gekoppelt ist;
jede Pixeleinheit einen fotoelektrischen Detektor, PD, eine Spannungsdetektionsschaltung und eine Stromdetektionsschaltung umfasst, wobei die Spannungsdetektionsschaltung eine erste Schaltkomponente umfasst und die Stromdetektionsschaltung eine zweite Schaltkomponente umfasst;
die Logiksteuerschaltung dazu konfiguriert ist, die erste Schaltkomponente und die zweite Schaltkomponente in jeder Pixeleinheit zu steuern, um eine Bildgebung oder eine Umgebungslichtdetektion in unterschiedlichen Betriebsmodi durchzuführen; und
die Logiksteuerschaltung ferner dazu konfiguriert ist, die Zeilen-Spalten-Steuerschaltung zu steuern, um eine Bildverbesserung oder eine Umgebungslichtdetektionsverbesserung an der Vielzahl von Pixeleinheiten in der Vielzahl von Spektralanordnungen in unterschiedlichen Signalkombinationsarten durchzuführen.

2. Multispektrale Detektionsvorrichtung (160) nach Anspruch 1, wobei die Logiksteuerschaltung dazu konfiguriert ist, die erste Schaltkomponente in jeder Pixeleinheit zu steuern, eingeschaltet zu sein, und die zweite Schaltkomponente in jeder Pixeleinheit, ausgeschaltet zu sein, um über die erste Schaltkomponente ein Stromsignal, das durch Durchführen einer optisch-zu-elektrisch-Wandlung durch den PD in jeder Pixeleinheit erlangt wird, an den Spannungserfassungs-ADC zu übertragen, um die Bildgebung durchzuführen; oder die Logiksteuerschaltung dazu konfiguriert ist, die erste Schaltkomponente in jeder Pixeleinheit zu steuern, ausgeschaltet zu sein, und die zweite Schaltkomponente in jeder Pixeleinheit, eingeschaltet zu sein, um über die zweite Schaltkomponente ein Stromsignal, das durch Durchführen einer optisch-zu-elektrisch-Wandlung durch den PD in jeder Pixeleinheit erlangt wird, an den Stromerfassungs-ADC zu übertragen, um die Umgebungslichtdetektion durchzuführen.

3. Multispektrale Detektionsvorrichtung (160) nach Anspruch 2, wobei die Stromdetektionsschaltung in jeder Pixeleinheit ferner einen Stromspiegel umfasst und die Spannungsdetektionsschaltung in jeder Pixeleinheit ferner einen Zurücksetzungstransistor, einen Sourcefolgertransistor und einen Zeilenauswählertransistor umfasst; und
für jede Pixeleinheit ein Ausgangsende des PD an ein erstes Ende der ersten Schaltkomponente und ein erstes Ende der zweiten Schaltkomponente gekoppelt ist, ein zweites Ende der ersten Schaltkomponente an ein erstes Ende des Zurücksetzungstransistors und ein erstes Ende des Sourcefolgertransistors gekoppelt ist, ein zweites Ende des Sourcefolgertransistors an ein erstes Ende des Zeilenauswählertransistors gekoppelt ist, ein zweites Ende des Zeilenauswählertransistors an ein erstes Eingangsende der Zeilen-Spalten-Steuerschaltung gekoppelt ist, ein erstes Ausgangsende der Zeilen-Spalten-Steuerschaltung an den Spannungserfassungs-ADC gekoppelt ist, ein zweites Ausgangsende der Zeilen-Spalten-Steuerschaltung an den Stromerfassungs-ADC gekoppelt ist, ein zweites Ende der zweiten Schaltkomponente an ein erstes Ende des Stromspiegels gekoppelt ist und ein erstes Ausgangsende des Stromspiegels an ein zweites Eingangsende der Zeilen-Spalten-Steuerschaltung gekoppelt ist.

4. Multispektrale Detektionsvorrichtung (160) nach einem der Ansprüche 1 bis 3, wobei die Logiksteuerschaltung zu Folgendem konfiguriert ist:
wenn bestimmt wird, eine Umgebungslichtintensitätsdetektion durchzuführen, Steuern der ersten Schaltkomponente in jeder Pixeleinheit, ausgeschaltet zu sein, und der zweiten Schaltkomponente in jeder Pixeleinheit, eingeschaltet zu sein; und
Steuern, in einer Form einer einzelnen Spektralanordnung, der Zeilen-Spalten-Steuerschaltung, eine Signalkombination unter Verwendung aller Einzelkanal-Spektraleinheiten in jeder Spektralanordnung als eine Gruppe durchzuführen, wobei ein Signal, das durch Durchführen der Signalkombination in der Gruppe erlangt wird, eine Umgebungslichtintensität in einer Spektralanordnungsregion anzeigt.

5. Multispektrale Detektionsvorrichtung (160) nach einem der Ansprüche 1 bis 3, wobei die Logiksteuerschaltung zu Folgendem konfiguriert ist:
wenn bestimmt wird, eine Umgebungslichtintensitätsdetektion durchzuführen, Steuern der ersten Schaltkomponente in jeder Pixeleinheit, ausgeschaltet zu sein, und der zweiten Schaltkomponente in jeder Pixeleinheit, eingeschaltet zu sein; und
Steuern der Zeilen-Spalten-Steuerschaltung, die Vielzahl von Spektralanordnungen in Regionen zu trennen und die Signalkombination unter Verwendung von Einzelkanal-Spektraleinheiten in allen Spektralanordnungen in jeder Region als eine Gruppe durchzuführen, wobei ein Signal, das durch Durchführen der Signalkombination in der Gruppe erlangt wird, eine Umgebungslichtintensität in einer Spektralanordnungsregion anzeigt.

6. Multispektrale Detektionsvorrichtung (160) nach einem der Ansprüche 1 bis 3, wobei die Logiksteuerschaltung zu Folgendem konfiguriert ist:
wenn bestimmt wird, eine Umgebungslichtartdetektion durchzuführen, Steuern der ersten Schaltkomponente in jeder Pixeleinheit, ausgeschaltet zu sein, und der zweiten Schaltkomponente in jeder Pixeleinheit, eingeschaltet zu sein (1001); und
Steuern der Zeilen-Spalten-Steuerschaltung, die Vielzahl von Spektralanordnungen in Regionen zu trennen und die Signalkombination unter Verwendung der gleichen Einzelkanal-Spektraleinheiten in allen Spektralanordnungen in jeder Region als eine Gruppe durchzuführen, um ein kombiniertes Signal jeder Art von Einzelkanal-Spektraleinheit in jeder Region zu erlangen, wobei ein Signal, das durch Durchführen der Signalkombination in der Gruppe in jeder Region erlangt wird, eine Umgebungslichtart anzeigt (1002).

7. Multispektrale Detektionsvorrichtung (160) nach einem der Ansprüche 1 bis 3, wobei die Logiksteuerschaltung zu Folgendem konfiguriert ist:
wenn bestimmt wird, eine multispektrale Bildgebung durchzuführen, Steuern der ersten Schaltkomponente in jeder Pixeleinheit, eingeschaltet zu sein, und der zweiten Schaltkomponente in jeder Pixeleinheit, ausgeschaltet zu sein (1301); und
Steuern der Zeilen-Spalten-Steuerschaltung, die Signalkombination unter Verwendung der Vielzahl von Pixeleinheiten jeder Einzelkanal-Spektraleinheit in jeder Spektralanordnung in der Vielzahl von Spektralanordnungen als eine Gruppe durchzuführen, um ein kombiniertes Signal jeder Einzelkanal-Spektraleinheit in jeder Spektralanordnung zu erlangen, wobei das kombinierte Signal jeder Einzelkanal-Spektraleinheit in jeder Spektralanordnung für die multispektrale Bildgebung verwendet wird (1302).

8. Multispektrale Detektionsvorrichtung (160) nach Anspruch 7, wobei die Logiksteuerschaltung zu Folgendem konfiguriert ist:
wenn bestimmt wird, eine multispektrale Bildgebung durchzuführen, Steuern der ersten Schaltkomponente in jeder Pixeleinheit, eingeschaltet zu sein, und der zweiten Schaltkomponente in jeder Pixeleinheit, ausgeschaltet zu sein;
Steuern der Zeilen-Spalten-Steuerschaltung, die Vielzahl von Einzelkanal-Spektraleinheiten in jeder Spektralanordnung in der Vielzahl von Spektralanordnungen zu gruppieren, wobei jede Gruppe eine Vielzahl von benachbarten Einzelkanal-Spektraleinheiten umfasst; und
Steuern der Zeilen-Spalten-Steuerschaltung, die Signalkombination in jeder Gruppe jeder Spektralanordnung durchzuführen, um ein kombiniertes Signal jeder Gruppe jeder Spektralanordnung zu erlangen, wobei das kombinierte Signal jeder Gruppe jeder Spektralanordnung für die multispektrale Bildgebung verwendet wird.

9. Multispektrale Detektionsvorrichtung (160) nach einem der Ansprüche 4 bis 8, wobei die Signalkombination Folgendes umfasst:
Ladungskombination, analoge Bereichskombination oder digitale Bereichskombination.

10. Multispektrale Detektionsvorrichtung (160) nach einem der Ansprüche 4 bis 8, wobei die Logiksteuerschaltung ferner zu Folgendem konfiguriert ist:
wenn bestimmt wird, dass eine Umgebungslichtintensität eines aktuellen Einzelbilds größer als oder gleich einem voreingestellten Schwellenwert ist, Reduzieren einer Belichtung und/oder einer Verstärkung jeder Pixeleinheit eines nächsten Einzelbilds beim Erlangen eines Signals von jeder Pixeleinheit des nächsten Einzelbilds; oder
wenn bestimmt wird, dass eine Umgebungslichtintensität eines aktuellen Einzelbilds geringer als ein voreingestellter Schwellenwert ist, Erhöhen einer Belichtung und/oder einer Verstärkung jeder Pixeleinheit eines nächsten Einzelbilds beim Erlangen eines Signals von jeder Pixeleinheit des nächsten Einzelbilds.

11. Multispektrales Verarbeitungsverfahren, das auf eine multispektrale Detektionsvorrichtung (160) angewendet wird, wobei die multispektrale Detektionsvorrichtung eine Logiksteuerschaltung, eine Vielzahl von Spektralanordnungen, eine Zeilen-Spalten-Steuerschaltung, eine Vielzahl von Stromerfassungs-Analog-Digital-Wandlern, Stromerfassungs-ADCs, und eine Vielzahl von Spannungserfassungs-ADCs umfasst, wobei jede Spektralanordnung eine Vielzahl von Einzelkanal-Spektraleinheiten umfasst und jede Einzelkanal-Spektraleinheit in der Vielzahl von Einzelkanal-Spektraleinheiten eine Vielzahl von Pixeleinheiten umfasst;
für jede Pixeleinheit in der Vielzahl von Pixeleinheiten jede Pixeleinheit mit der Zeilen-Spalten-Steuerschaltung, einem Stromerfassungs-ADC in der Vielzahl von Stromerfassungs-ADCs und einem Spannungserfassungs-ADC in der Vielzahl von Spannungserfassungs-ADCs gekoppelt ist;
jede Pixeleinheit einen fotoelektrischen Detektor, PD, eine Spannungsdetektionsschaltung und eine Stromdetektionsschaltung umfasst, wobei die Spannungsdetektionsschaltung eine erste Schaltkomponente umfasst und die Stromdetektionsschaltung eine zweite Schaltkomponente umfasst; und
das Verfahren Folgendes umfasst:
Steuern, durch die multispektrale Detektionsvorrichtung, der Logiksteuerschaltung, die erste Schaltkomponente und die zweite Schaltkomponente in jeder Pixeleinheit zu steuern, um eine Bildgebung oder eine Umgebungslichtdetektion in unterschiedlichen Betriebsmodi durchzuführen; und
Steuern, durch die multispektrale Detektionsvorrichtung, der Logiksteuerschaltung, die Zeilen-Spalten-Steuerschaltung zu steuern, um eine Bildverbesserung oder eine Umgebungslichtdetektionsverbesserung an der Vielzahl von Pixeleinheiten in der Vielzahl von Spektralanordnungen in unterschiedlichen Signalkombinationsarten durchzuführen.

12. Verfahren nach Anspruch 11, wobei das Steuern, durch die multispektrale Detektionsvorrichtung (160), der Logiksteuerschaltung, die erste Schaltkomponente und die zweite Schaltkomponente in jeder Pixeleinheit zu steuern, um eine Bildgebung oder eine Umgebungslichtdetektion in unterschiedlichen Betriebsmodi durchzuführen, Folgendes umfasst:
Steuern, durch die multispektrale Detektionsvorrichtung, der Logiksteuerschaltung, dazu konfiguriert zu sein, die erste Schaltkomponente in jeder Pixeleinheit einzuschalten und die zweite Schaltkomponente in jeder Pixeleinheit auszuschalten, um über die erste Schaltkomponente ein Stromsignal, das durch Durchführen einer optisch-zu-elektrisch-Wandlung durch den PD in jeder Pixeleinheit erlangt wird, an den Spannungserfassungs-ADC zu übertragen, um die Bildgebung durchzuführen; oder
Steuern, durch die multispektrale Detektionsvorrichtung, der Logiksteuerschaltung, dazu konfiguriert zu sein, die erste Schaltkomponente in jeder Pixeleinheit auszuschalten und die zweite Schaltkomponente in jeder Pixeleinheit einzuschalten, um über die zweite Schaltkomponente ein Stromsignal, das durch Durchführen einer optisch-zu-elektrisch-Wandlung durch den PD in jeder Pixeleinheit erlangt wird, an den Stromerfassungs-ADC zu übertragen, um die Umgebungslichtdetektion durchzuführen.

13. Verfahren nach Anspruch 11, wobei die Stromdetektionsschaltung in jeder Pixeleinheit ferner einen Stromspiegel umfasst und die Spannungsdetektionsschaltung in jeder Pixeleinheit ferner einen Zurücksetzungstransistor, einen Sourcefolgertransistor und einen Zeilenauswählertransistor umfasst; und
für jede Pixeleinheit ein Ausgangsende des PD an ein erstes Ende der ersten Schaltkomponente und ein erstes Ende der zweiten Schaltkomponente gekoppelt ist, ein zweites Ende der ersten Schaltkomponente an ein erstes Ende des Zurücksetzungstransistors und ein erstes Ende des Sourcefolgertransistors gekoppelt ist, ein zweites Ende des Sourcefolgertransistors an ein erstes Ende des Zeilenauswählertransistors gekoppelt ist, ein zweites Ende des Zeilenauswählertransistors an ein erstes Eingangsende der Zeilen-Spalten-Steuerschaltung gekoppelt ist, ein erstes Ausgangsende der Zeilen-Spalten-Steuerschaltung an den Spannungserfassungs-ADC gekoppelt ist, ein zweites Ausgangsende der Zeilen-Spalten-Steuerschaltung an den Stromerfassungs-ADC gekoppelt ist, ein zweites Ende der zweiten Schaltkomponente an ein erstes Ende des Stromspiegels gekoppelt ist und ein erstes Ausgangsende des Stromspiegels an ein zweites Eingangsende der Zeilen-Spalten-Steuerschaltung gekoppelt ist.

14. Verfahren nach einem der Ansprüche 11 bis 13, wobei das Steuern, durch die multispektrale Detektionsvorrichtung (160), der Logiksteuerschaltung, die Zeilen-Spalten-Steuerschaltung zu steuern, um eine Bildverbesserung oder eine Umgebungslichtdetektionsverbesserung an der Vielzahl von Pixeleinheiten in der Vielzahl von Spektralanordnungen in unterschiedlichen Signalkombinationsarten durchzuführen, Folgendes umfasst:
wenn bestimmt wird, eine Umgebungslichtintensitätsdetektion durchzuführen, Steuern der ersten Schaltkomponente in jeder Pixeleinheit, ausgeschaltet zu sein, und der zweiten Schaltkomponente in jeder Pixeleinheit, eingeschaltet zu sein; und
Steuern, in einer Form einer einzelnen Spektralanordnung, der Zeilen-Spalten-Steuerschaltung, eine Signalkombination unter Verwendung aller Einzelkanal-Spektraleinheiten in jeder Spektralanordnung als eine Gruppe durchzuführen, wobei ein Signal, das durch Durchführen der Signalkombination in der Gruppe erlangt wird, eine Umgebungslichtintensität in einer Spektralanordnungsregion anzeigt.

15. Verfahren nach einem der Ansprüche 11 bis 13, wobei das Steuern, durch die multispektrale Detektionsvorrichtung (160), der Logiksteuerschaltung, die Zeilen-Spalten-Steuerschaltung zu steuern, um eine Bildverbesserung oder eine Umgebungslichtdetektionsverbesserung an der Vielzahl von Pixeleinheiten in der Vielzahl von Spektralanordnungen in unterschiedlichen Signalkombinationsarten durchzuführen, Folgendes umfasst:
wenn bestimmt wird, eine Umgebungslichtintensitätsdetektion durchzuführen, Steuern der ersten Schaltkomponente in jeder Pixeleinheit, ausgeschaltet zu sein, und der zweiten Schaltkomponente in jeder Pixeleinheit, eingeschaltet zu sein; und
Steuern der Zeilen-Spalten-Steuerschaltung, die Vielzahl von Spektralanordnungen in Regionen zu trennen und die Signalkombination unter Verwendung von Einzelkanal-Spektraleinheiten in allen Spektralanordnungen in jeder Region als eine Gruppe durchzuführen, wobei ein Signal, das durch Durchführen der Signalkombination in der Gruppe erlangt wird, eine Umgebungslichtintensität in einer Spektralanordnungsregion anzeigt.

## Revendications

1. Appareil de détection multispectrale (160),
dans lequel l'appareil de détection multispectrale comprend un circuit de commande logique, une pluralité de réseaux spectraux, un circuit de commande ligne-colonne, une pluralité de convertisseurs analogiques-numériques, ADC, de collecte de courant et une pluralité d'ADC de collecte de tension ;
chaque réseau spectral comprend une pluralité d'unités spectrales monocanal, et chaque unité spectrale monocanal dans la pluralité d'unités spectrales monocanal comprend une pluralité d'unités de pixels ;
pour chaque unité de pixel dans la pluralité d'unités de pixels, chaque unité de pixel est couplée au circuit de commande ligne-colonne, à un ADC de collecte de courant dans la pluralité d'ADC de collecte de courant, et à un ADC de collecte de tension dans la pluralité d'ADC de collecte de tension ;
chaque unité de pixel comprend un détecteur photoélectrique PD, un circuit de détection de tension et un circuit de détection de courant, dans lequel le circuit de détection de tension comprend un premier composant de commutation et le circuit de détection de courant comprend un second composant de commutation ;
le circuit de commande logique est configuré pour commander le premier composant de commutation et le second composant de commutation de chaque unité de pixel, pour réaliser l'imagerie ou la détection de lumière ambiante dans différents modes de fonctionnement ; et
le circuit de commande logique est en outre configuré pour commander le circuit de commande ligne-colonne pour effectuer une amélioration d'imagerie ou une amélioration de détection de lumière ambiante sur la pluralité d'unités de pixels dans la pluralité de réseaux spectraux selon différentes combinaisons de signaux.

2. Appareil de détection multispectrale (160) selon la revendication 1, dans lequel
le circuit de commande logique est configuré pour commander l'activation du premier composant de commutation de chaque unité de pixel et la désactivation du second composant de commutation de chaque unité de pixel, pour transmettre à l'ADC de collecte de tension, par l'intermédiaire du premier composant de commutation, un signal de courant obtenu par conversion optoélectrique par le PD de chaque unité de pixel, pour réaliser l'imagerie ; ou le circuit de commande logique est configuré pour commander la désactivation du premier composant de commutation de chaque unité de pixel et l'activation du second composant de commutation de chaque unité de pixel, pour transmettre à l'ADC de collecte de courant par l'intermédiaire du second composant de commutation, un signal de courant obtenu par conversion optoélectrique par le PD de chaque unité de pixel, pour réaliser la détection de lumière ambiante.

3. Appareil de détection multispectrale (160) selon la revendication 2, dans lequel le circuit de détection de courant de chaque unité de pixel comprend en outre un miroir de courant, et le circuit de détection de tension de chaque unité de pixel comprend en outre un transistor de réinitialisation, un transistor suiveur de source et un transistor de sélection de ligne ; et
pour chaque unité de pixel, une extrémité de sortie du PD est couplée à une première extrémité du premier composant de commutation et à une première extrémité du second composant de commutation, une seconde extrémité du premier composant de commutation est couplée à une première extrémité du transistor de réinitialisation et à une première extrémité du transistor suiveur de source, une seconde extrémité du transistor suiveur de source est couplée à une première extrémité du transistor de sélection de ligne, une seconde extrémité du transistor de sélection de ligne est couplée à une première extrémité d'entrée du circuit de commande ligne-colonne, une première extrémité de sortie du circuit de commande ligne-colonne est couplée à l'ADC de collecte de tension, une seconde extrémité de sortie du circuit de commande ligne-colonne est couplée à l'ADC de collecte de courant, une seconde extrémité du second composant de commutation est couplée à une première extrémité du miroir de courant, et une première extrémité de sortie du miroir de courant est couplée à une seconde extrémité d'entrée du circuit de commande ligne-colonne.

4. Appareil de détection multispectrale (160) selon l'une quelconque des revendications 1 à 3, dans lequel le circuit de commande logique est configuré pour :
lorsqu'il est déterminé d'effectuer une détection d'intensité lumineuse ambiante, commander la désactivation du premier composant de commutation de chaque unité de pixel et l'activation du second composant de commutation de chaque unité de pixel ; et
commander, sous la forme d'un réseau spectral unique, le circuit de commande ligne-colonne pour effectuer une combinaison de signaux à l'aide de toutes les unités spectrales monocanal de chaque réseau spectral comme un groupe, dans lequel un signal obtenu en effectuant une combinaison de signaux dans le groupe indique une intensité lumineuse ambiante dans une zone du réseau spectral.

5. Appareil de détection multispectrale (160) selon l'une quelconque des revendications 1 à 3, dans lequel le circuit de commande logique est configuré pour :
lorsqu'il est déterminé d'effectuer une détection d'intensité lumineuse ambiante, commander la désactivation du premier composant de commutation de chaque unité de pixel et l'activation du second composant de commutation de chaque unité de pixel ; et
commander le circuit de commande ligne-colonne pour diviser la pluralité de réseaux spectraux en zones, et réaliser une combinaison de signaux à l'aide des unités spectrales monocanal de tous les réseaux spectraux de chaque zone comme un groupe, dans lequel un signal obtenu en effectuant une combinaison de signaux dans le groupe indique une intensité lumineuse ambiante dans une zone du réseau spectral.

6. Appareil de détection multispectrale (160) selon l'une quelconque des revendications 1 à 3, dans lequel le circuit de commande logique est configuré pour :
lorsqu'il est déterminé d'effectuer une détection de type de lumière ambiante, commander la désactivation du premier composant de commutation de chaque unité de pixel et l'activation (1001) du second composant de commutation de chaque unité de pixel ; et
commander le circuit de commande ligne-colonne pour diviser la pluralité de réseaux spectraux en zones, et réaliser une combinaison de signaux à l'aide des mêmes unités spectrales monocanal de tous les réseaux spectraux de chaque zone comme un groupe, pour obtenir un signal combiné de chaque type d'unité spectrale monocanal dans chaque zone, dans lequel un signal obtenu en effectuant une combinaison de signaux dans le groupe de chaque zone indique un type de lumière ambiante (1002).

7. Appareil de détection multispectrale (160) selon l'une quelconque des revendications 1 à 3, dans lequel le circuit de commande logique est configuré pour :
lorsqu'il est déterminé d'effectuer une imagerie multispectrale, commander l'activation du premier composant de commutation de chaque unité de pixel et la désactivation (1301) du second composant de commutation de chaque unité de pixel ; et
commander le circuit de commande ligne-colonne pour effectuer une combinaison de signaux à l'aide de la pluralité d'unités de pixels de chaque unité spectrale monocanal dans chaque réseau spectral de la pluralité de réseaux spectraux comme un groupe, pour obtenir un signal combiné de chaque unité spectrale monocanal dans chaque réseau spectral, dans lequel le signal combiné de chaque unité spectrale monocanal dans chaque réseau spectral est utilisé pour l'imagerie multispectrale (1302).

8. Appareil de détection multispectrale (160) selon la revendication 7, dans lequel le circuit de commande logique est configuré pour :
lorsqu'il est déterminé d'effectuer une imagerie multispectrale, commander l'activation du premier composant de commutation de chaque unité de pixel et la désactivation du second composant de commutation de chaque unité de pixel ;
commander le circuit de commande ligne-colonne pour regrouper la pluralité d'unités spectrales monocanal dans chaque réseau spectral de la pluralité de réseaux spectraux, dans lequel chaque groupe comprend une pluralité d'unités spectrales monocanal adjacentes ; et
commander le circuit de commande ligne-colonne pour effectuer la combinaison de signaux dans chaque groupe de chaque réseau spectral, afin d'obtenir un signal combiné de chaque groupe de chaque réseau spectral, dans lequel le signal combiné de chaque groupe de chaque réseau spectral est utilisé pour l'imagerie multispectrale.

9. Appareil de détection multispectrale (160) selon l'une quelconque des revendications 4 à 8, dans lequel la combinaison de signaux comprend :
la combinaison de charges, la combinaison de domaines analogiques ou la combinaison de domaines numériques.

10. Appareil de détection multispectrale (160) selon l'une quelconque des revendications 4 à 8, dans lequel le circuit de commande logique est en outre configuré pour :
lorsqu'il est déterminé qu'une intensité lumineuse ambiante d'une image en cours est supérieure ou égale à un seuil prédéfini, réduire l'exposition et/ou un gain de chaque unité de pixel de l'image suivante lors de l'obtention d'un signal de chaque unité de pixel de l'image suivante ; ou
lorsqu'il est déterminé qu'une intensité lumineuse ambiante d'une image en cours est inférieure à un seuil prédéfini, augmenter l'exposition et/ou un gain de chaque unité de pixel de l'image suivante lors de l'obtention d'un signal de chaque unité de pixel de l'image suivante.

11. Procédé de traitement multispectral, appliqué à un appareil de détection multispectrale (160), dans lequel l'appareil de détection multispectrale comprend un circuit de commande logique, une pluralité de réseaux spectraux, un circuit de commande ligne-colonne, une pluralité de convertisseurs analogiques-numériques, ADC, de collecte de courant et une pluralité d'ADC de collecte de tension, dans lequel
chaque réseau spectral comprend une pluralité d'unités spectrales monocanal, et chaque unité spectrale monocanal dans la pluralité d'unités spectrales monocanal comprend une pluralité d'unités de pixels ;
pour chaque unité de pixel dans la pluralité d'unités de pixels, chaque unité de pixel est couplée au circuit de commande ligne-colonne, à un ADC de collecte de courant dans la pluralité d'ADC de collecte de courant, et à un ADC de collecte de tension dans la pluralité d'ADC de collecte de tension ;
chaque unité de pixel comprend un détecteur photoélectrique PD, un circuit de détection de tension et un circuit de détection de courant, dans lequel le circuit de détection de tension comprend un premier composant de commutation et le circuit de détection de courant comprend un second composant de commutation ; et
le procédé comprend :
la commande, par l'appareil de détection multispectrale, du circuit de commande logique pour commander le premier composant de commutation et le second composant de commutation de chaque unité de pixel, pour réaliser l'imagerie ou la détection de lumière ambiante dans différents modes de fonctionnement ; et
la commande, par l'appareil de détection multispectrale, du circuit de commande logique pour commander le circuit de commande ligne-colonne pour effectuer une amélioration d'imagerie ou une amélioration de détection de lumière ambiante sur la pluralité d'unités de pixels dans la pluralité de réseaux spectraux selon différentes combinaisons de signaux.

12. Procédé selon la revendication 11, dans lequel la commande, par l'appareil de détection multispectrale (160), du circuit de commande logique pour commander le premier composant de commutation et le second composant de commutation de chaque unité de pixel, pour réaliser l'imagerie ou la détection de lumière ambiante dans différents modes de fonctionnement comprend :
la commande, par l'appareil de détection multispectrale, du circuit de commande logique configuré pour activer le premier composant de commutation de chaque unité de pixel et désactiver le second composant de commutation de chaque unité de pixel, afin de transmettre, à l'ADC de collecte de tension par l'intermédiaire du premier composant de commutation, un signal de courant obtenu par conversion optoélectrique par le PD de chaque unité de pixel, pour réaliser l'imagerie ; ou
la commande, par l'appareil de détection multispectrale, du circuit de commande logique configuré pour désactiver le premier composant de commutation de chaque unité de pixel et activer le second composant de commutation de chaque unité de pixel, afin de transmettre, à l'ADC de collecte de courant par l'intermédiaire du second composant de commutation, un signal de courant obtenu par conversion optoélectrique par le PD de chaque unité de pixel, pour réaliser la détection lumineuse ambiante.

13. Procédé selon la revendication 11, dans lequel le circuit de détection de courant de chaque unité de pixel comprend en outre un miroir de courant, et le circuit de détection de tension de chaque unité de pixel comprend en outre un transistor de réinitialisation, un transistor suiveur de source et un transistor de sélection de ligne ; et
pour chaque unité de pixel, une extrémité de sortie du PD est couplée à une première extrémité du premier composant de commutation et à une première extrémité du second composant de commutation, une seconde extrémité du premier composant de commutation est couplée à une première extrémité du transistor de réinitialisation et à une première extrémité du transistor suiveur de source, une seconde extrémité du transistor suiveur de source est couplée à une première extrémité du transistor de sélection de ligne, une seconde extrémité du transistor de sélection de ligne est couplée à une première extrémité d'entrée du circuit de commande ligne-colonne, une première extrémité de sortie du circuit de commande ligne-colonne est couplée à l'ADC de collecte de tension, une seconde extrémité de sortie du circuit de commande ligne-colonne est couplée à l'ADC de collecte de courant, une seconde extrémité du second composant de commutation est couplée à une première extrémité du miroir de courant, et une première extrémité de sortie du miroir de courant est couplée à une seconde extrémité d'entrée du circuit de commande ligne-colonne.

14. Procédé selon l'une quelconque des revendications 11 à 13, dans lequel la commande, par l'appareil de détection multispectrale (160),
du circuit de commande logique pour commander le circuit de commande ligne-colonne pour effectuer une amélioration d'imagerie ou une amélioration de détection de lumière ambiante sur la pluralité d'unités de pixels dans la pluralité de réseaux spectraux selon différentes combinaisons de signaux comprend :
lorsqu'il est déterminé d'effectuer une détection d'intensité lumineuse ambiante, la commande de désactiver le premier composant de commutation de chaque unité de pixel et d'activer le second composant de commutation de chaque unité de pixel ; et
la commande, sous la forme d'un réseau spectral unique, au circuit de commande ligne-colonne d'effectuer une combinaison de signaux à l'aide de toutes les unités spectrales monocanal de chaque réseau spectral comme un groupe, dans lequel un signal obtenu en effectuant une combinaison de signaux dans le groupe indique une intensité lumineuse ambiante dans une zone du réseau spectral.

15. Procédé selon l'une quelconque des revendications 11 à 13, dans lequel la commande, par l'appareil de détection multispectrale (160),
du circuit de commande logique pour commander le circuit de commande ligne-colonne pour effectuer une amélioration d'imagerie ou une amélioration de détection de lumière ambiante sur la pluralité d'unités de pixels dans la pluralité de réseaux spectraux selon différentes combinaisons de signaux comprend :
lorsqu'il est déterminé d'effectuer une détection d'intensité lumineuse ambiante, la commande de désactiver le premier composant de commutation de chaque unité de pixel et d'activer le second composant de commutation de chaque unité de pixel ; et
la commande au circuit de commande ligne-colonne de diviser la pluralité de réseaux spectraux en zones, et la réalisation d'une combinaison de signaux à l'aide des unités spectrales monocanal de tous les réseaux spectraux de chaque zone comme un groupe, dans lequel un signal obtenu en effectuant une combinaison de signaux dans le groupe indique une intensité lumineuse ambiante dans une zone du réseau spectral.
